# EUROPEAN PATENT APPLICATION

(11) **EP 4 841 291 A2**
(43) Date of publication of application: **18.11.2026**
(21) Application number: 26209496.4
(22) Date of filing: 15.07.2024
(51) Int. Cl.: G01S 1/00

(54) **SECURITY ENHANCEMENTS FOR RANGING USING EXTERNAL INFRASTRUCTURE**

(30) Priority: 31.07.2023 GR 20230100636
(62) Document number(s) of the earlier application(s) in accordance with Art. 76 EPC: 24749118.6 / 4 755 109
(71) Applicant: QUALCOMM Incorporated, San Diego, CA 92121-1714 (US)
(72) Inventor: REDDY, Varun Amar, San Diego, 92121 (US); MANOLAKOS, Alexandros, San Diego, 92121 (US)
(74) Representative: Reddie & Grose LLP

(57) **Abstract**

A first wireless device may receive, during a plurality of time domains, a plurality of positioning signals from a second wireless device and a third wireless device. The first wireless device may measure the plurality of positioning signals. The first wireless device may calculate, based on the measured plurality of positioning signals, a plurality of location attributes corresponding to the plurality of time domains. The first wireless device may transmit a report message including a first indicator of an irregular transmission associated with at least one of the plurality of time domains or a second indicator of the calculated plurality of location attributes corresponding to the plurality of time domains.

## Description

### CROSS-REFERENCE TO RELATED APPLICATION

This application claims the benefit of Greek Patent Application No. 20230100636, entitled "SECURITY ENHANCEMENTS FOR RANGING USING EXTERNAL INFRASTRUCTURE" and filed on July 31, 2023, which is expressly incorporated by reference herein in its entirety.

### TECHNICAL FIELD

The present disclosure relates generally to communication systems, and more particularly, to security infrastructure for a positioning system.

### INTRODUCTION

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

### BRIEF SUMMARY

The following presents a simplified summary of one or more aspects in order to provide a basic understanding of such aspects. This summary is not an extensive overview of all contemplated aspects. This summary neither identifies key or critical elements of all aspects nor delineates the scope of any or all aspects. Its sole purpose is to present some concepts of one or more aspects in a simplified form as a prelude to the more detailed description that is presented later.

In an aspect of the disclosure, a method, a computer-readable medium, and an apparatus are provided. The apparatus may include a first wireless device. The apparatus may receive, during a plurality of time domains, a plurality of positioning signals from a second wireless device and a third wireless device. The apparatus may measure the plurality of positioning signals. The apparatus may calculate, based on the measured plurality of positioning signals, a plurality of location attributes corresponding to the plurality of time domains. The apparatus may transmit a report message including a first indicator of an irregular transmission associated with at least one of the plurality of time domains or a second indicator of the calculated plurality of location attributes corresponding to the plurality of time domains.

In some aspects, the calculated plurality of location attributes may include at least one of a time of arrival (ToA), an angle of arrival (AoA), a reference signal strength indicator (RSSI), a channel energy response, a maximum-to-median ratio associated with the channel energy response, a range, or a location.

In some aspects, the plurality of positioning signals may include at least one of a Bluetooth low energy (BLE) signal, an ultra-wideband (UWB) signal, a Wi-Fi signal, or a sidelink signal.

In some aspects, the plurality of time domains may include a periodic set of equal time domains.

In some aspects, the apparatus may calculate a reliability metric for each of the plurality of time domains. The report message may include at least one of a third indicator of the reliability metric for each of the plurality of time domains or a fourth indicator of a ranking list of the plurality of time domains based on the reliability metric for each of the plurality of time domains.

In some aspects, the apparatus may calculate the reliability metric for each of the plurality of time domains by calculating the reliability metric for each of the plurality of time domains based on at least one of a histogram of the plurality of location attributes, a Gaussian model of the plurality of location attributes, a standard deviation of the plurality of location attributes, a signal-to-interference plus noise ratio (SINR) corresponding to each of the plurality of positioning signals, or a strength indicator of a peak in a corresponding channel response associated with each of the plurality of positioning signals.

In some aspects, the apparatus may receive a set of report messages from a set of wireless devices. Each of the set of report messages may include a second plurality of location attributes corresponding to the plurality of time domains. The apparatus may identify the irregular transmission based on the plurality of location attributes and each of the second plurality of location attributes.

In some aspects, the apparatus may identify the irregular transmission by calculating a position of the second wireless device or the third wireless device based on the plurality of location attributes and each of the second plurality of location attributes and by identifying the irregular transmission as a transmission from a second position other than the calculated position.

In some aspects, the apparatus may identify the irregular transmission by calculating a range between the second wireless device and the third wireless device based on the plurality of location attributes and each of the second plurality of location attributes and by identifying the irregular transmission as a transmission from a device having a second range from at least one of the second wireless device and the third wireless device other than the calculated range.

In some aspects, the apparatus may identify an irregular report message from the set of report messages based on the plurality of location attributes and each of the second plurality of location attributes; and may disregard a subset of the set of report messages associated with the irregular report message in response to the identification of the irregular report message.

In some aspects, the second wireless device and the third wireless device may conduct a positioning session based on the plurality of positioning signals. In other words, the second wireless device and the third wireless device may conduct a positioning session relative to one another based on at least one of the second wireless device transmitting positioning signals to the third wireless device or the third wireless device transmitting positioning signals to the second wireless device. The plurality of location attributes may be associated with at least one of the second wireless device or the third wireless device.

In some aspects, the apparatus may include an access point (AP). In some aspects, the second wireless device may include a first user equipment (UE) In some aspects, the third wireless device may include a second UE.

In an aspect of the disclosure, a method, a computer-readable medium, and an apparatus are provided. The apparatus may include a first wireless device. The apparatus may receive, during a plurality of time domains, a set of positioning signals from a second wireless device. The apparatus may receive a report message including a first indicator of an irregular transmission associated with at least one of the plurality of time domains or a second indicator of a plurality of location attributes corresponding to the plurality of time domains. The apparatus may measure the set of positioning signals. The apparatus may select a subset of the measured set of positioning signals based on at least one of the first indicator or the second indicator. The apparatus may calculate a position of the second wireless device based on the subset of the measured set of positioning signals.

In some aspects, the plurality of location attributes may include at least one of a time of arrival (ToA), an angle of arrival (AoA), a reference signal strength indicator (RSSI), a channel energy response, a maximum-to-median ratio associated with the channel energy response, a range, or a location.

In some aspects, the set of positioning signals may include at least one of a Bluetooth low energy (BLE) signal, an ultra-wideband (UWB) signal, a Wi-Fi signal, or a sidelink signal.

In some aspects, the plurality of time domains may include a periodic set of equal time domains.

In some aspects, the report message may include at least one of a third indicator of a reliability metric for each of the plurality of time domains or a fourth indicator of a ranking list of the plurality of time domains based on the reliability metric for each of the plurality of time domains. The apparatus may select the subset of the measured set of positioning signals by selecting the subset of the measured set of positioning signals further based on at least one of the third indicator or the fourth indicator.

In some aspects, the apparatus may receive the report message by receiving the report message from a third wireless device. The apparatus may receive a second report message from a fourth wireless device. The second report message may include a third indicator of a second irregular transmission associated with at least one of the plurality of time domains or a fourth indicator of a second plurality of location attributes corresponding to the plurality of time domains. The apparatus may select the subset of the measured set of positioning signals by selecting the subset of the measured set of positioning signals further based on at least one of the third indicator or the fourth indicator.

In some aspects, the third wireless device may include a first access point (AP). The fourth wireless device may include a second AP.

In some aspects, the apparatus may include a first user equipment (UE). The second wireless device may include a second UE.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of downlink (DL) channels within a subframe, in accordance with various aspects of the present disclosure.
FIG. 2C is a diagram illustrating an example of a second frame, in accordance with various aspects of the present disclosure.
FIG. 2D is a diagram illustrating an example of uplink (UL) channels within a subframe, in accordance with various aspects of the present disclosure.
FIG. 3 is a diagram illustrating an example of a base station and user equipment (UE) in an access network.
FIG. 4 is a diagram illustrating an example of positioning based on reference signal measurements.
FIG. 5A-5B are diagrams illustrating examples of positioning with a malicious device that may interfere with positioning.
FIG. 6A-6B are diagrams illustrating examples of positioning with monitoring devices that may identify an irregular transmission transmitted by a malicious device.
FIG. 7 is a connection flow diagram illustrating examples of positioning with a set of monitoring devices that may identify an irregular transmission transmitted by a malicious device.
FIG. 8 is a flowchart of a method of wireless communication.
FIG. 9 is a flowchart of a method of wireless communication.
FIG. 10 is a flowchart of a method of wireless communication.
FIG. 11 is a flowchart of a method of wireless communication.
FIG. 12 is a flowchart of a method of wireless communication.
FIG. 13 is a diagram illustrating an example of a hardware implementation for an example apparatus and/or network entity.
FIG. 14 is a diagram illustrating an example of a hardware implementation for an example network entity.
FIG. 15 is a diagram illustrating an example of a hardware implementation for an example network entity.

### DETAILED DESCRIPTION

The following description is directed to examples for the purposes of describing innovative aspects of this disclosure. However, a person having ordinary skill in the art may recognize that the teachings herein may be applied in a multitude of ways. Some or all of the described examples may be implemented in any device, system or network that is capable of transmitting and receiving radio frequency (RF) signals according to one or more of the Institute of Electrical and Electronics Engineers (IEEE) 802.11 standards, the IEEE 802.15 standards, the Bluetooth^{®} standards as defined by the Bluetooth Special Interest Group (SIG), or the Long Term Evolution (LTE), 3G, 4G or 5G (New Radio (NR)) standards promulgated by the 3rd Generation Partnership Project (3GPP), among others. The described examples may be implemented in any device, system or network that is capable of transmitting and receiving RF signals according to one or more of the following technologies or techniques: code division multiple access (CDMA), time division multiple access (TDMA), frequency division multiple access (FDMA), orthogonal FDMA (OFDMA), single-carrier FDMA (SC-FDMA), spatial division multiple access (SDMA), rate-splitting multiple access (RSMA), multi-user shared access (MUSA), single-user (SU) multiple-input multiple-output (MIMO) and multi-user (MU)-MIMO. The described examples also may be implemented using other wireless communication protocols or RF signals suitable for use in one or more of a wireless personal area network (WPAN), a wireless local area network (WLAN), a wireless wide area network (WWAN), a wireless metropolitan area network (WMAN), or an internet of things (IoT) network.

Various aspects relate generally to authentication of positioning signals. Some aspects more specifically relate to security enhancements for positioning sessions using infrastructure external to the devices performing positioning. In some examples, a first wireless device may receive, during a plurality of time domains, a plurality of positioning signals from a second wireless device and a third wireless device. The first wireless device may measure the plurality of positioning signals. The first wireless device may calculate, based on the measured plurality of positioning signals, a plurality of location attributes corresponding to the plurality of time domains. The first wireless device may transmit a report message including a first indicator of an irregular transmission associated with at least one of the plurality of time domains or a second indicator of the calculated plurality of location attributes corresponding to the plurality of time domains.

In some examples, a first wireless device may receive, during a plurality of time domains, a set of positioning signals from a second wireless device. The first wireless device may receive a report message including a first indicator of an irregular transmission associated with at least one of the plurality of time domains or a second indicator of a plurality of location attributes corresponding to the plurality of time domains. The first wireless device may measure the set of positioning signals. The first wireless device may select a subset of the measured set of positioning signals based on at least one of the first indicator or the second indicator. The first wireless device may calculate a position of the second wireless device based on the subset of the measured set of positioning signals.

In some aspects, a system may passively validate range estimates (e.g., round-trip time (RTT) or round-trip phase (RTP) and notify a user in case of a security breach, using ambient wireless infrastructure such as access points (APs). In some aspects, one or more APs may be configured to monitor ranging measurements exchanged between nodes (e.g., UEs, TRPs) and may compare the measurements against the AP's own ranging calculations based on differential time-of-arrival (DTOA) and/or differential angle-of-arrival (DAOA) to detect a security breach in a time slot. In some aspects, an AP may indicate one or more nodes of the breached time slot(s). In some aspects, an AP may provide a ranking of time slots based on reliability. In response, an initiator node may discard one or more measurements based on the indicator. In some aspects, one or more wireless devices (e.g., an AP and/or a server) may aggregate measurements from a plurality of measurements to collectively calculate a range estimate, an uncertainty associated with the calculated range estimate and provide the uncertainty to one or more nodes. The one or more nodes may authenticate ranging measurements based on the uncertainty. In some aspects, cooperative positioning using anchor node-target node and target node-target node combinations may be used to improve overall position estimation accuracy of target nodes.

Particular aspects of the subject matter described in this disclosure can be implemented to realize one or more of the following potential advantages. In some examples, by transmitting a report message including an indicator of an irregular transmission or an indicator of location attributes that may be used to identify an irregular transmission, the described techniques can be used to identify transmissions from malicious devices. For example, the described techniques may be used to identify phase roll-over manipulations, where the ambiguity effect may be exploited to cause phase roll-overs for authentic reference signals by a malicious node. Since typical spoofing devices may not be able to consistently spoof many positioning signals over time, the described techniques may identify such spurious measurements by offloading computations to infrastructure external to a positioning session (e.g., an access point (AP) infrastructure). Such external infrastructure may provide a security check that may be passively performed in the background. Methods based on the received signal strength of transmissions may be robust against such attacks. Moreover, such external infrastructure may also detect spoofing.

The detailed description set forth below in connection with the drawings describes various configurations and does not represent the only configurations in which the concepts described herein may be practiced. The detailed description includes specific details for the purpose of providing a thorough understanding of various concepts. However, these concepts may be practiced without these specific details. In some instances, well known structures and components are shown in block diagram form in order to avoid obscuring such concepts.

Several aspects of telecommunication systems are presented with reference to various apparatus and methods. These apparatus and methods are described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. When multiple processors are implemented, the multiple processors may perform the functions individually or in combination. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software, whether referred to as software, firmware, middleware, microcode, hardware description language, or otherwise, shall be construed broadly to mean instructions, instruction sets, code, code segments, program code, programs, subprograms, software components, applications, software applications, software packages, routines, subroutines, objects, executables, threads of execution, procedures, functions, or any combination thereof.

Accordingly, in one or more example aspects, implementations, and/or use cases, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, such computer-readable media can include a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects, implementations, and/or use cases are described in this application by illustration to some examples, additional or different aspects, implementations and/or use cases may come about in many different arrangements and scenarios. Aspects, implementations, and/or use cases described herein may be implemented across many differing platform types, devices, systems, shapes, sizes, and packaging arrangements. For example, aspects, implementations, and/or use cases may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described examples may occur. Aspects, implementations, and/or use cases may range a spectrum from chip-level or modular components to non-modular, non-chip-level implementations and further to aggregate, distributed, or original equipment manufacturer (OEM) devices or systems incorporating one or more techniques herein. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). Techniques described herein may be practiced in a wide variety of devices, chip-level components, systems, distributed arrangements, aggregated or disaggregated components, end-user devices, etc. of varying sizes, shapes, and constitution.

Deployment of communication systems, such as 5G NR systems, may be arranged in multiple manners with various components or constituent parts. In a 5G NR system, or network, a network node, a network entity, a mobility element of a network, a radio access network (RAN) node, a core network node, a network element, or a network equipment, such as a base station (BS), or one or more units (or one or more components) performing base station functionality, may be implemented in an aggregated or disaggregated architecture. For example, a BS (such as a Node B (NB), evolved NB (eNB), NR BS, 5G NB, access point (AP), a transmission reception point (TRP), or a cell, etc.) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more central or centralized units (CUs), one or more distributed units (DUs), or one or more radio units (RUs)). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU can be implemented as virtual units, i.e., a virtual central unit (VCU), a virtual distributed unit (VDU), or a virtual radio unit (VRU).

Base station operation or network design may consider aggregation characteristics of base station functionality. For example, disaggregated base stations may be utilized in an integrated access backhaul (IAB) network, an open radio access network (O-RAN (such as the network configuration sponsored by the O-RAN Alliance)), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

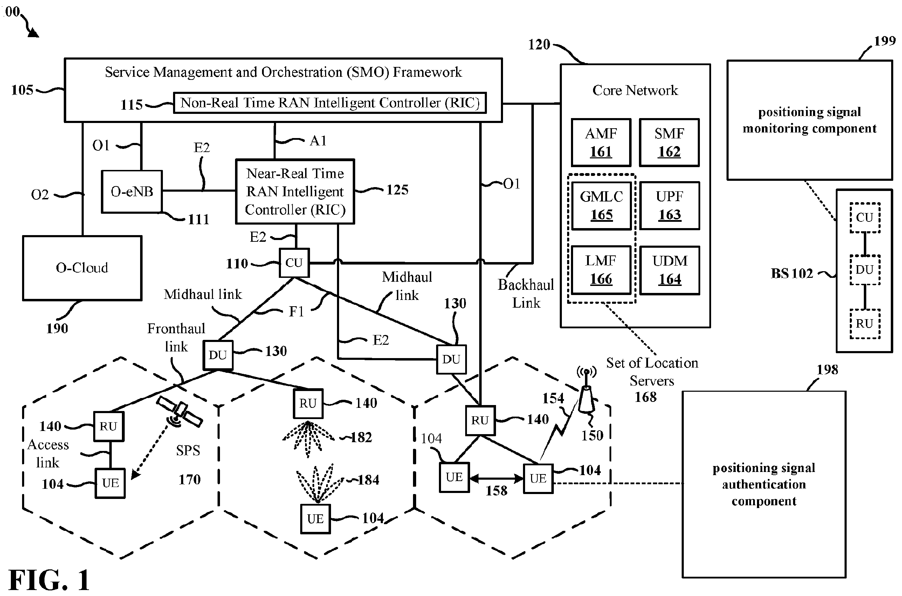

FIG. 1 is a diagram 100 illustrating an example of a wireless communications system and an access network. The illustrated wireless communications system includes a disaggregated base station architecture. The disaggregated base station architecture may include one or more CUs 110 that can communicate directly with a core network 120 via a backhaul link, or indirectly with the core network 120 through one or more disaggregated base station units (such as a Near-Real Time (Near-RT) RAN Intelligent Controller (RIC) 125 via an E2 link, or a Non-Real Time (Non-RT) RIC 115 associated with a Service Management and Orchestration (SMO) Framework 105, or both). A CU 110 may communicate with one or more DUs 130 via respective midhaul links, such as an F1 interface. The DUs 130 may communicate with one or more RUs 140 via respective fronthaul links. The RUs 140 may communicate with respective UEs 104 via one or more radio frequency (RF) access links. In some implementations, the UE 104 may be simultaneously served by multiple RUs 140.

Each of the units, i.e., the CUs 110, the DUs 130, the RUs 140, as well as the Near-RT RICs 125, the Non-RT RICs 115, and the SMO Framework 105, may include one or more interfaces or be coupled to one or more interfaces configured to receive or to transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or to transmit signals over a wired transmission medium to one or more of the other units. Additionally, the units can include a wireless interface, which may include a receiver, a transmitter, or a transceiver (such as an RF transceiver), configured to receive or to transmit signals, or both, over a wireless transmission medium to one or more of the other units.

In some aspects, the CU 110 may host one or more higher layer control functions. Such control functions can include radio resource control (RRC), packet data convergence protocol (PDCP), service data adaptation protocol (SDAP), or the like. Each control function can be implemented with an interface configured to communicate signals with other control functions hosted by the CU 110. The CU 110 may be configured to handle user plane functionality (i.e., Central Unit - User Plane (CU-UP)), control plane functionality (i.e., Central Unit - Control Plane (CU-CP)), or a combination thereof. In some implementations, the CU 110 can be logically split into one or more CU-UP units and one or more CU-CP units. The CU-UP unit can communicate bidirectionally with the CU-CP unit via an interface, such as an E1 interface when implemented in an O-RAN configuration. The CU 110 can be implemented to communicate with the DU 130, as necessary, for network control and signaling.

The DU 130 may correspond to a logical unit that includes one or more base station functions to control the operation of one or more RUs 140. In some aspects, the DU 130 may host one or more of a radio link control (RLC) layer, a medium access control (MAC) layer, and one or more high physical (PHY) layers (such as modules for forward error correction (FEC) encoding and decoding, scrambling, modulation, demodulation, or the like) depending, at least in part, on a functional split, such as those defined by 3GPP. In some aspects, the DU 130 may further host one or more low PHY layers. Each layer (or module) can be implemented with an interface configured to communicate signals with other layers (and modules) hosted by the DU 130, or with the control functions hosted by the CU 110.

Lower-layer functionality can be implemented by one or more RUs 140. In some deployments, an RU 140, controlled by a DU 130, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 140 can be implemented to handle over the air (OTA) communication with one or more UEs 104. In some implementations, real-time and non-real-time aspects of control and user plane communication with the RU(s) 140 can be controlled by the corresponding DU 130. In some scenarios, this configuration can enable the DU(s) 130 and the CU 110 to be implemented in a cloud-based RAN architecture, such as a vRAN architecture.

The SMO Framework 105 may be configured to support RAN deployment and provisioning of non-virtualized and virtualized network elements. For non-virtualized network elements, the SMO Framework 105 may be configured to support the deployment of dedicated physical resources for RAN coverage requirements that may be managed via an operations and maintenance interface (such as an O1 interface). For virtualized network elements, the SMO Framework 105 may be configured to interact with a cloud computing platform (such as an open cloud (O-Cloud) 190) to perform network element life cycle management (such as to instantiate virtualized network elements) via a cloud computing platform interface (such as an O2 interface). Such virtualized network elements can include, but are not limited to, CUs 110, DUs 130, RUs 140 and Near-RT RICs 125. In some implementations, the SMO Framework 105 can communicate with a hardware aspect of a 4G RAN, such as an open eNB (O-eNB) 111, via an O1 interface. Additionally, in some implementations, the SMO Framework 105 can communicate directly with one or more RUs 140 via an O1 interface. The SMO Framework 105 also may include a Non-RT RIC 115 configured to support functionality of the SMO Framework 105.

The Non-RT RIC 115 may be configured to include a logical function that enables non-real-time control and optimization of RAN elements and resources, artificial intelligence (AI) / machine learning (ML) (AI/ML) workflows including model training and updates, or policy-based guidance of applications/features in the Near-RT RIC 125. The Non-RT RIC 115 may be coupled to or communicate with (such as via an A1 interface) the Near-RT RIC 125. The Near-RT RIC 125 may be configured to include a logical function that enables near-real-time control and optimization of RAN elements and resources via data collection and actions over an interface (such as via an E2 interface) connecting one or more CUs 110, one or more DUs 130, or both, as well as an O-eNB, with the Near-RT RIC 125.

In some implementations, to generate AI/ML models to be deployed in the Near-RT RIC 125, the Non-RT RIC 115 may receive parameters or external enrichment information from external servers. Such information may be utilized by the Near-RT RIC 125 and may be received at the SMO Framework 105 or the Non-RT RIC 115 from non-network data sources or from network functions. In some examples, the Non-RT RIC 115 or the Near-RT RIC 125 may be configured to tune RAN behavior or performance. For example, the Non-RT RIC 115 may monitor long-term trends and patterns for performance and employ AI/ML models to perform corrective actions through the SMO Framework 105 (such as reconfiguration via O1) or via creation of RAN management policies (such as A1 policies).

At least one of the CU 110, the DU 130, and the RU 140 may be referred to as a base station 102. Accordingly, a base station 102 may include one or more of the CU 110, the DU 130, and the RU 140 (each component indicated with dotted lines to signify that each component may or may not be included in the base station 102). The base station 102 provides an access point to the core network 120 for a UE 104. The base station 102 may include macrocells (high power cellular base station) and/or small cells (low power cellular base station). The small cells include femtocells, picocells, and microcells. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links between the RUs 140 and the UEs 104 may include uplink (UL) (also referred to as reverse link) transmissions from a UE 104 to an RU 140 and/or downlink (DL) (also referred to as forward link) transmissions from an RU 140 to a UE 104. The communication links may use multiple-input and multiple-output (MIMO) antenna technology, including spatial multiplexing, beamforming, and/or transmit diversity. The communication links may be through one or more carriers. The base station 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL wireless wide area network (WWAN) spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, Bluetooth^{™} (Bluetooth is a trademark of the Bluetooth Special Interest Group (SIG)), Wi-Fi^{™} (Wi-Fi is a trademark of the Wi-Fi Alliance) based on the Institute of Electrical and Electronics Engineers (IEEE) 802.11 standard, LTE, or NR.

The wireless communications system may further include a Wi-Fi AP 150 in communication with UEs 104 (also referred to as Wi-Fi stations (STAs)) via communication link 154, e.g., in a 5 GHz unlicensed frequency spectrum or the like. When communicating in an unlicensed frequency spectrum, the UEs 104 / AP 150 may perform a clear channel assessment (CCA) prior to communicating in order to determine whether the channel is available.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR2-2 (52.6 GHz - 71 GHz), FR4 (71 GHz - 114.25 GHz), and FR5 (114.25 GHz - 300 GHz). Each of these higher frequency bands falls within the EHF band.

With the above aspects in mind, unless specifically stated otherwise, the term "sub-6 GHz" or the like if used herein may broadly represent frequencies that may be less than 6 GHz, may be within FR1, or may include mid-band frequencies. Further, unless specifically stated otherwise, the term "millimeter wave" or the like if used herein may broadly represent frequencies that may include mid-band frequencies, may be within FR2, FR4, FR2-2, and/or FR5, or may be within the EHF band.

The base station 102 and the UE 104 may each include a plurality of antennas, such as antenna elements, antenna panels, and/or antenna arrays to facilitate beamforming. The base station 102 may transmit a beamformed signal 182 to the UE 104 in one or more transmit directions. The UE 104 may receive the beamformed signal from the base station 102 in one or more receive directions. The UE 104 may also transmit a beamformed signal 184 to the base station 102 in one or more transmit directions. The base station 102 may receive the beamformed signal from the UE 104 in one or more receive directions. The base station 102 / UE 104 may perform beam training to determine the best receive and transmit directions for each of the base station 102 / UE 104. The transmit and receive directions for the base station 102 may or may not be the same. The transmit and receive directions for the UE 104 may or may not be the same.

The base station 102 may include and/or be referred to as a gNB, Node B, eNB, an access point, a base transceiver station, a radio base station, a radio transceiver, a transceiver function, a basic service set (BSS), an extended service set (ESS), a TRP, network node, network entity, network equipment, or some other suitable terminology. The base station 102 can be implemented as an integrated access and backhaul (IAB) node, a relay node, a sidelink node, an aggregated (monolithic) base station with a baseband unit (BBU) (including a CU and a DU) and an RU, or as a disaggregated base station including one or more of a CU, a DU, and/or an RU. The set of base stations, which may include disaggregated base stations and/or aggregated base stations, may be referred to as next generation (NG) RAN (NG-RAN).

The core network 120 may include an Access and Mobility Management Function (AMF) 161, a Session Management Function (SMF) 162, a User Plane Function (UPF) 163, a Unified Data Management (UDM) 164, one or more location servers 168, and other functional entities. The AMF 161 is the control node that processes the signaling between the UEs 104 and the core network 120. The AMF 161 supports registration management, connection management, mobility management, and other functions. The SMF 162 supports session management and other functions. The UPF 163 supports packet routing, packet forwarding, and other functions. The UDM 164 supports the generation of authentication and key agreement (AKA) credentials, user identification handling, access authorization, and subscription management. The one or more location servers 168 are illustrated as including a Gateway Mobile Location Center (GMLC) 165 and a Location Management Function (LMF) 166. However, generally, the one or more location servers 168 may include one or more location/positioning servers, which may include one or more of the GMLC 165, the LMF 166, a position determination entity (PDE), a serving mobile location center (SMLC), a mobile positioning center (MPC), or the like. The GMLC 165 and the LMF 166 support UE location services. The GMLC 165 provides an interface for clients/applications (e.g., emergency services) for accessing UE positioning information. The LMF 166 receives measurements and assistance information from the NG-RAN and the UE 104 via the AMF 161 to compute the position of the UE 104. The NG-RAN may utilize one or more positioning methods in order to determine the position of the UE 104. Positioning the UE 104 may involve signal measurements, a position estimate, and an optional velocity computation based on the measurements. The signal measurements may be made by the UE 104 and/or the base station 102 serving the UE 104. The signals measured may be based on one or more of a satellite positioning system (SPS) 170 (e.g., one or more of a Global Navigation Satellite System (GNSS), global position system (GPS), non-terrestrial network (NTN), or other satellite position/location system), LTE signals, wireless local area network (WLAN) signals, Bluetooth signals, a terrestrial beacon system (TBS), sensor-based information (e.g., barometric pressure sensor, motion sensor), NR enhanced cell ID (NR E-CID) methods, NR signals (e.g., multi-round trip time (Multi-RTT), DL angle-of-departure (DL-AoD), DL time difference of arrival (DL-TDOA), UL time difference of arrival (UL-TDOA), and UL angle-of-arrival (UL-AoA) positioning), and/or other systems/signals/sensors.

Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In some scenarios, the term UE may also apply to one or more companion devices such as in a device constellation arrangement. One or more of these devices may collectively access the network and/or individually access the network.

Referring again to FIG. 1, in certain aspects, the base station 102 may have a positioning signal monitoring component 199 that may be configured to receive, during a plurality of time domains, a plurality of positioning signals from a second wireless device and a third wireless device. The positioning signal monitoring component 199 may be configured to measure the plurality of positioning signals. The positioning signal monitoring component 199 may be configured to calculate, based on the measured plurality of positioning signals, a plurality of location attributes corresponding to the plurality of time domains. The positioning signal monitoring component 199 may be configured to transmit a report message including a first indicator of an irregular transmission associated with at least one of the plurality of time domains or a second indicator of the calculated plurality of location attributes corresponding to the plurality of time domains. In certain aspects, the UE 104 may have a positioning signal authentication component 198 that may be configured to receive, during a plurality of time domains, a set of positioning signals from a second wireless device. The positioning signal authentication component 198 may be configured to receive a report message including a first indicator of an irregular transmission associated with at least one of the plurality of time domains or a second indicator of a plurality of location attributes corresponding to the plurality of time domains. The positioning signal authentication component 198 may be configured to measure the set of positioning signals. The positioning signal authentication component 198 may be configured to select a subset of the measured set of positioning signals based on at least one of the first indicator or the second indicator. The positioning signal authentication component 198 may be configured to calculate a position of the second wireless device based on the subset of the measured set of positioning signals. In other words, the positioning signal monitoring component 199 may monitor a plurality of positioning signals, calculating a plurality of location attributes associated with the devices transmitting the plurality of positioning signals for a plurality of time domains. The positioning signal monitoring component 199 may transmit a report message with an indicator of the calculated plurality of location attributes so that the positioning signal authentication component 198 may determine an irregular transmission based on whether a transmission transmitted during a time domain diverges from the calculated plurality of location attributes corresponding to a plurality of time domains. In another aspect, the positioning signal monitoring component 199 may determine the irregular transmission, and may transmit a report message with an indicator of an irregular transmission to the positioning signal authentication component 198. The positioning signal authentication component 198 may then exclude the irregular transmission from consideration, thereby maintaining the security of transmissions.

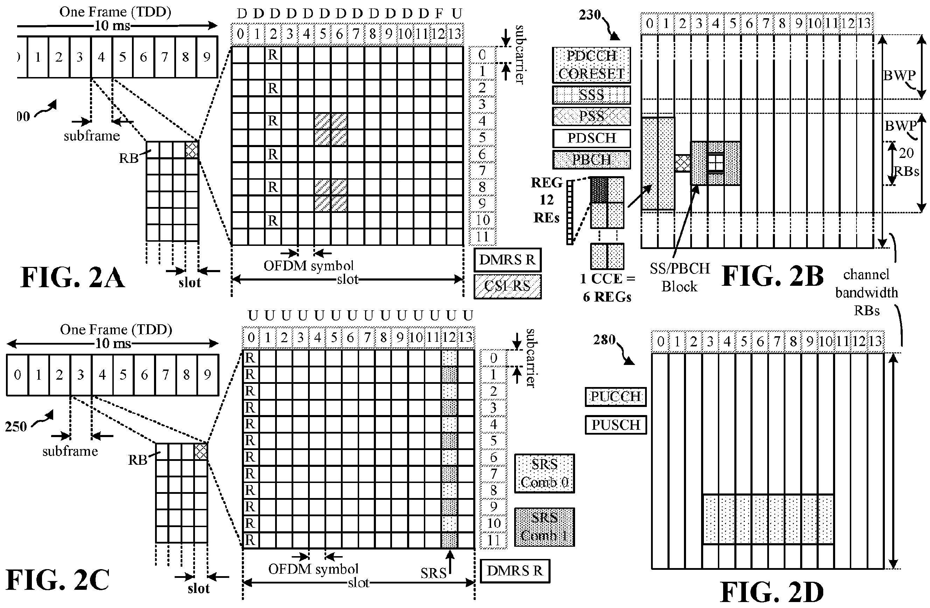

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

FIGs. 2A-2D illustrate a frame structure, and the aspects of the present disclosure may be applicable to other wireless communication technologies, which may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 14 or 12 symbols, depending on whether the cyclic prefix (CP) is normal or extended. For normal CP, each slot may include 14 symbols, and for extended CP, each slot may include 12 symbols. The symbols on DL may be CP orthogonal frequency division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (for power limited scenarios; limited to a single stream transmission). The number of slots within a subframe is based on the CP and the numerology. The numerology defines the subcarrier spacing (SCS) (see Table 1). The symbol length/duration may scale with 1/SCS.

**Table 1: Numerology, SCS, and CP**

| **µ** | **SCS Δ*f*** = **2*^{µ}* · 15[kHz]** | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |
| 6 | 960 | Normal |

For normal CP (14 symbols/slot), different numerologies µ 0 to 4 allow for 1, 2, 4, 8, and 16 slots, respectively, per subframe. For extended CP, the numerology 2 allows for 4 slots per subframe. Accordingly, for normal CP and numerology µ, there are 14 symbols/slot and 2^{µ} slots/subframe. The subcarrier spacing may be equal to 2*^{µ}* * 15 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of normal CP with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology and CP (normal or extended).

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) feedback (i.e., one or more HARQ ACK bits indicating one or more ACK and/or negative ACK (NACK)). The PUSCH carries data, and may additionally be used to carry a buffer status report (BSR), a power headroom report (PHR), and/or UCI.

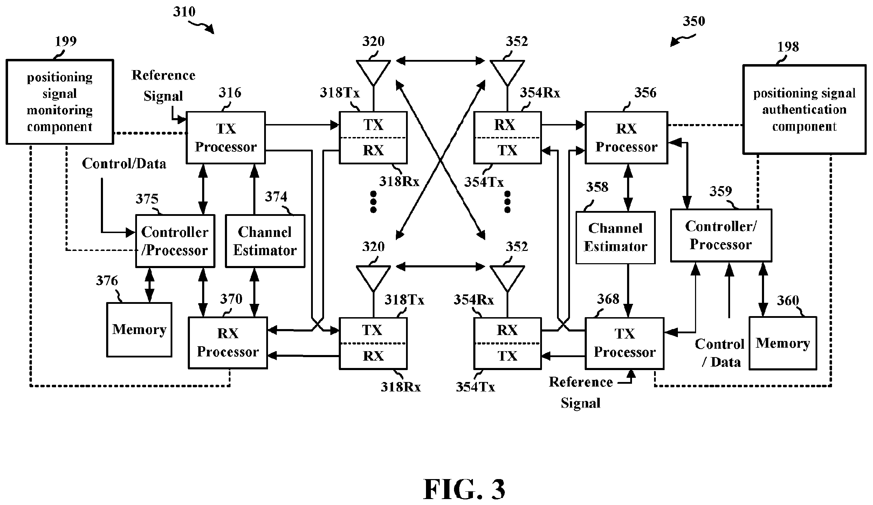

FIG. 3 is a block diagram of a base station 310 in communication with a UE 350 in an access network. In the DL, Internet protocol (IP) packets may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318Tx. Each transmitter 318Tx may modulate a radio frequency (RF) carrier with a respective spatial stream for transmission.

At the UE 350, each receiver 354Rx receives a signal through its respective antenna 352. Each receiver 354Rx recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal includes a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with at least one memory 360 that stores program codes and data. The at least one memory 360 may be referred to as a computer-readable medium. In the UL, the controller/processor 359 provides demultiplexing between transport and logical channels, packet reassembly, deciphering, header decompression, and control signal processing to recover IP packets. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354Tx. Each transmitter 354Tx may modulate an RF carrier with a respective spatial stream for transmission.

The UL transmission is processed at the base station 310 in a manner similar to that described in connection with the receiver function at the UE 350. Each receiver 318Rx receives a signal through its respective antenna 320. Each receiver 318Rx recovers information modulated onto an RF carrier and provides the information to a RX processor 370.

The controller/processor 375 can be associated with at least one memory 376 that stores program codes and data. The at least one memory 376 may be referred to as a computer-readable medium. In the UL, the controller/processor 375 provides demultiplexing between transport and logical channels, packet reassembly, deciphering, header decompression, control signal processing to recover IP packets. The controller/processor 375 is also responsible for error detection using an ACK and/or NACK protocol to support HARQ operations.

At least one of the TX processor 368, the RX processor 356, and the controller/processor 359 may be configured to perform aspects in connection with the positioning signal authentication component 198 of FIG. 1.

At least one of the TX processor 316, the RX processor 370, and the controller/processor 375 may be configured to perform aspects in connection with the positioning signal monitoring component 199 of FIG. 1.

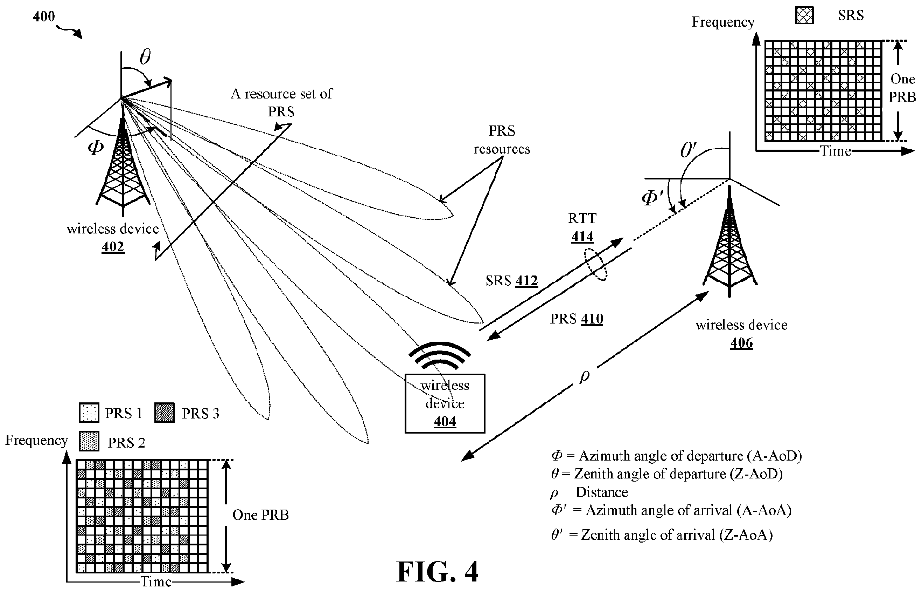

FIG. 4 is a diagram 400 illustrating an example of positioning of wireless devices based on reference signal measurements. The wireless device 402 may be a UE. The UE may be a positioning reference unit (PRU). A PRU may be a UE with a known location used for calibration purposes. The wireless device 402 may be a base station, such as a TRP or an AP. The wireless device 406 may be a base station, such as a TRP or an AP. The wireless device 402, the wireless device 404, and the wireless device 406 may be configured to transmit and receive positioning signals with one another. The positioning signals may be transmitted using any wireless technology protocol, such as Bluetooth, UWB, Wi-Fi, or sidelink (e.g., NR sidelink).

By way of example, the wireless device 404 may transmit UL-SRS 412 at time T_{SRS_TX} and receive DL positioning reference signals (PRS) (DL-PRS) 410 at time T_{PRS_RX}. The wireless device 406 may receive the UL-SRS 412 at time T_{SRS_RX} and transmit the DL-PRS 410 at time T_{PRS_TX}. The wireless device 404 may receive the DL-PRS 410 before transmitting the UL-SRS 412, or may transmit the UL-SRS 412 before receiving the DL-PRS 410. In both cases, a positioning server (e.g., location server(s)168) or the wireless device 404 may determine the RTT 414 based on ∥T_{SRS_RX} - T_{PRS_TX}| - |T_{SRS_TX} - T_{PRS_RX}∥. Accordingly, multi-RTT positioning may make use of the UE Rx-Tx time difference measurements (i.e., |T_{SRS_TX} - T_{PRS_RX}|) and DL-PRS reference signal received power (RSRP) (DL-PRS-RSRP) of downlink signals received from multiple wireless devices 402, 406 and measured by the wireless device 404, and the measured TRP Rx-Tx time difference measurements (i.e., |T_{SRS_PX} - T_{PRS_TX}|) and UL-SRS-RSRP at multiple wireless devices 402, 406 of uplink signals transmitted from wireless device 404. The wireless device 404 measures the UE Rx-Tx time difference measurements (and optionally DL-PRS-RSRP of the received signals) using assistance data received from the positioning server, and the wireless devices 402, 406 measure the gNB Rx-Tx time difference measurements (and optionally UL-SRS-RSRP of the received signals) using assistance data received from the positioning server. The measurements may be used at the positioning server or the wireless device 404 to determine the RTT, which is used to estimate the location of the wireless device 404. Other methods are possible for determining the RTT, such as for example using DL-TDOA and/or UL-TDOA measurements.

DL-AoD positioning may make use of the measured DL-PRS-RSRP of downlink signals received from multiple wireless devices 402, 406 at the wireless device 404. The wireless device 404 measures the DL-PRS-RSRP of the received signals using assistance data received from the positioning server, and the resulting measurements are used along with the azimuth angle of departure (A-AoD), the zenith angle of departure (Z-AoD), and other configuration information to locate the wireless device 404 in relation to the neighboring wireless devices 402, 406.

DL-TDOA positioning may make use of the DL reference signal time difference (RSTD) (and optionally DL-PRS-RSRP) of downlink signals received from multiple wireless devices 402, 406 at the wireless device 404. The wireless device 404 measures the DL RSTD (and optionally DL-PRS-RSRP) of the received signals using assistance data received from the positioning server, and the resulting measurements are used along with other configuration information to locate the wireless device 404 in relation to the neighboring wireless devices 402, 406.

UL-TDOA positioning may make use of the UL relative time of arrival (RTOA) (and optionally UL-SRS-RSRP) at multiple wireless devices 402, 406 of uplink signals transmitted from wireless device 404. The wireless devices 402, 406 measure the UL-RTOA (and optionally UL-SRS-RSRP) of the received signals using assistance data received from the positioning server, and the resulting measurements are used along with other configuration information to estimate the location of the wireless device 404.

UL-AoA positioning may make use of the measured azimuth angle of arrival (A-AoA) and zenith angle of arrival (Z-AoA) at multiple wireless devices 402, 406 of uplink signals transmitted from the wireless device 404. The wireless devices 402, 406 measure the A-AoA and the Z-AoA of the received signals using assistance data received from the positioning server, and the resulting measurements are used along with other configuration information to estimate the location of the wireless device 404.

Additional positioning methods may be used for estimating the location of the wireless device 404, such as for example, UE-side UL-AoD and/or DL-AoA. Note that data/measurements from various technologies may be combined in various ways to increase accuracy, to determine and/or to enhance certainty, to supplement/complement measurements, and/or to substitute/provide for missing information.

A sequence of instructions configuring a wireless device to transmit a positioning signal (e.g., an SRS, a PRS, a CSI-RS, an SSB) and another wireless device to measure the positioning signal to calculate a location attribute associated with the wireless devices relative to one another may be referred to as a positioning session.

Carrier-phase based positioning (e.g., ranging) may be performed using any suitable wireless technology, such as Bluetooth, UWB, Wi-Fi, or sidelink (e.g., NR sidelink). In other words, the positioning signals may include Bluetooth low energy (BLE) signals, ultra-wideband (UWB) signals, Wi-Fi signals, and/or sidelink signals. The sidelink signals may be, for example, NR or cellular signals. Different wireless technologies may provide different levels of accuracy. For example, when performing positioning using BLE signals, an accuracy on the order of decimeters may be achieved when basing positioning calculations based on BLE signals, which makes BLE signal-based positioning an attractive option for use-cases such as proximity-based access control (e.g., digital car key unlocking a car within range of the car key, unlocking a door of a building using a digital key within range of the door) and asset-tracking (e.g., tracking the location of an asset within an area). Performing ranging utilizing such high-accuracy signals may also be referred to as high-accuracy distance measurement (HADM) measurements. However, security for such use-cases may be of concern. Carrier-based positioning methods may be susceptible to phase roll-over manipulations, where the ambiguity effect may be exploited by a malicious device to cause phase roll-overs for authentic reference signals. A malicious node (e.g., a third device eavesdropping on signals exchanged between a first device and a second device, a compromised node that is part of a network that is operated via a security vulnerability in the compromised node) may corrupt exchanged data.

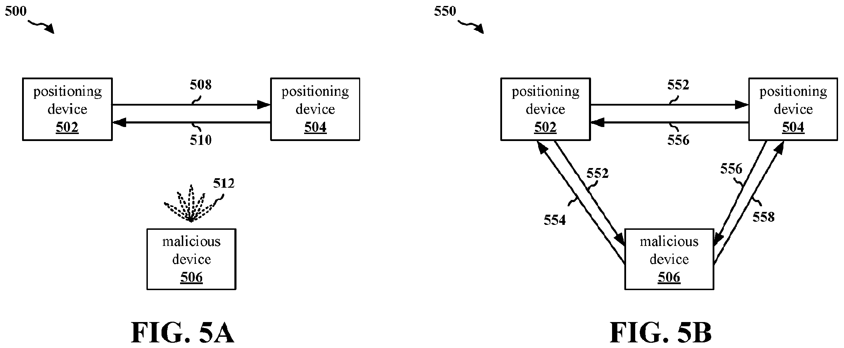

FIG. 5A-5B are diagrams illustrating examples of positioning with a malicious device that may interfere with positioning. With respect to FIG. 5A, diagram 500 illustrates a positioning device 502 communicating wirelessly with a positioning device 504. The positioning device 502 may be a wireless device capable of communicating with another wireless device via a wireless technology, such as BLE, UWB, Wi-Fi- or sidelink. The positioning device 502 may be a UE, such as the UE 104. The positioning device 504 may be a wireless device capable of communicating with another wireless device via a wireless technology, such as BLE, UWB, Wi-Fi- or sidelink. The positioning device 504 may be a UE, such as the UE 104. The positioning device 502 may estimate its range with the positioning device 504, and vice versa, by exchanging positioning signals with one another. For example, the positioning device 502 may transmit a set of positioning signals 508 at the positioning device 504. The positioning device 504 may receive the set of positioning signals 508 from the positioning device 502. The positioning device 504 may measure the set of positioning signals 508, and calculate a range between the positioning device 502 and the positioning device 504 based on the set of positioning signals 508. Similarly, the positioning device 504 may transmit a set of positioning signals 510 at the positioning device 502. The positioning device 502 may receive the set of positioning signals 510 from the positioning device 504. The positioning device 502 may measure the set of positioning signals 510, and calculate a range between the positioning device 502 and the positioning device 504 based on the set of positioning signals 510.

In some aspects, a malicious device 506 may attempt to interfere with the positioning session between the positioning device 502 and the positioning device 504. For example, the malicious device 506 may transmit the set of transmissions 512 to falsify positioning signals, or to falsify measurements being made between the authentic devices, such as the positioning device 502 and the positioning device 504. Such a scenario may also be referred to as a man-in-the-middle (MITM) scenario.

With respect to FIG. 5B, diagram 550 illustrates a positioning device 502 and a positioning device 504 communicating wirelessly with a malicious device 506. The malicious device 506 may be a malicious node that hacks into a network and proactively falsifies measurements with authentic nodes, such as the positioning device 502 and the positioning device 504, by pretending to be an in-network authentic node. The malicious device 506 may be an authentic node that has been hacked, or may be a device that is masquerading as another device. For example, the malicious device 506 may be masquerading as the positioning device 502 with respect to the positioning device 504, and the malicious device 506 may be masquerading as the positioning device 504 with respect to the positioning device 502.

In other words, the positioning device 502 may transmit the set of positioning signals 552, thinking that they are being received and measured by the positioning device 504. The malicious device 506 may receive the set of positioning signals 552 and transmit the set of positioning signals 554 at the positioning device 502 in response, masquerading as the positioning device 504. Similarly, the positioning device 504 may transmit the set of positioning signals 556, thinking that they are being received and measured by the positioning device 502. The malicious device 506 may receive the set of positioning signals 556 and transmit the set of positioning signals 558 at the positioning device 504 in response, masquerading as the positioning device 502. Such a scenario may be referred to as an in-network scenario.

In some aspects, the use of round trip time (RTT) measurements along with carrier-phase measurements may be used for security. An RTT may be used to measure a coarse range to protect against phase roll-over manipulations, since RTT measurements are relatively robust against phase roll-over manipulations as compared with carrier-phase measurements. Special sounding sequences (SS), which are similar to RTT measurements, may also be used to detect MITM scenarios. For example, a channel sounding (CS) event may include a synchronization block, an RTT block, a round-trip phase (RTP) block, and an SS block. However, the efficacy of RTT may be low since coarse range estimation using RTT may have an error range on the order of several tens of meters if the signal uses a bandwidth of 1-2 MHz. Therefore, such an RTT may be unable to be used to sufficiently validate carrier based ranging (CBR) estimation errors with an expected link distance of a few meters. Moreover, RTT measurements may also be spoofed, for example via preamble injection, early detect, or late commit manipulations. Using such companion signals makes it more difficult for a malicious node to succeed in an MITM attack.

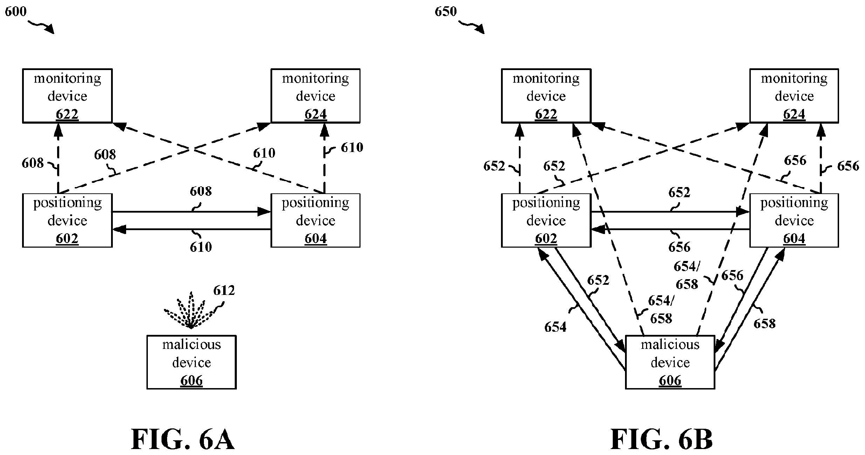

FIG. 6A-6B are diagrams illustrating examples of positioning with monitoring devices that may identify an irregular transmission transmitted by a malicious device. With respect to FIG. 6A, diagram 600 illustrates a positioning device 602 communicating wirelessly with a positioning device 604. The positioning device 602 may conduct a positioning session with the positioning device 604. The positioning device 602 may be a wireless device capable of communicating with another wireless device via a wireless technology, such as BLE, UWB, Wi-Fi- or sidelink. The positioning device 602 may be a UE, such as the UE 104. The positioning device 604 may be a wireless device capable of communicating with another wireless device via a wireless technology, such as BLE, UWB, Wi-Fi- or sidelink. The positioning device 604 may be a UE, such as the UE 104. The positioning device 602 may estimate its range with the positioning device 604, and vice versa, by exchanging positioning signals with one another. For example, the positioning device 602 may transmit a set of positioning signals 608 at the positioning device 604. The positioning device 604 may receive the set of positioning signals 608 from the positioning device 602. The positioning device 604 may measure the set of positioning signals 608, and calculate a range between the positioning device 602 and the positioning device 604 based on the set of positioning signals 608. Similarly, the positioning device 604 may transmit a set of positioning signals 610 at the positioning device 602. The positioning device 602 may receive the set of positioning signals 610 from the positioning device 604. The positioning device 602 may measure the set of positioning signals 610, and calculate a range between the positioning device 602 and the positioning device 604 based on the set of positioning signals 610.

The malicious device 606 may attempt to interfere with the positioning session between the positioning device 602 and the positioning device 604. For example, the malicious device 606 may transmit the set of transmissions 612 to falsify positioning signals, or to falsify measurements being made between the authentic devices, such as the positioning device 602 and the positioning device 604. In other words, the malicious device 606 may attempt to interfere with the positioning session between the positioning device 602 and the positioning device 604 by transmitting the set of transmissions 612 in an MITM scenario.

A set of monitoring devices, such as the monitoring device 622 and the monitoring device 624, may monitor positioning signals transmitted by the positioning device 602 and the positioning device 604 to assist in identifying malicious transmissions, such as the set of transmissions 612 from the malicious device 606. For example, while the positioning device 602 transmits the set of positioning signals 608 to the positioning device 604 for a positioning session, the monitoring device 622 and/or the monitoring device 624 may also receive the set of positioning signals 608. Similarly, while the positioning device 604 transmits the set of positioning signals 610 to the positioning device 602 for a positioning session, the monitoring device 622 and/or the monitoring device 624 may also receive the set of positioning signals 610. The monitoring devices may monitor the set of positioning signals 608 and the set of positioning signals 610 to calculate a plurality of location attributes. For example, the set of monitoring devices may calculate a time of arrival (ToA), an angle of arrival (AoA), a reference signal strength indicator (RSSI), a channel energy response, a maximum-to-median ratio associated with the channel energy response, a range, and/or a location. The plurality of location attributes may be associated with the positioning devices. For example, the plurality of location attributes may be used to estimate a location of the positioning device 602 and a location of the positioning device 604. Each of the plurality of location attributes may be associated with a plurality of time domains. In other words, each of the plurality of location attributes may be associated with a location of the positioning device 602 and the location of the positioning device 604 at different times. As a result, over time, the set of monitoring devices may understand the positions of the positioning device 602 and the positioning device 604. When the malicious device 606 transmits a set of transmissions 612 from a position different than the position of the positioning device 602 and the positioning device 604, the set of monitoring devices may then understand that the set of transmissions 612 is being transmitted from a position different than the position of the positioning device 602 and the positioning device 604.

With respect to FIG. 6B, diagram 650 illustrates a positioning device 602 and a positioning device 604 communicating wirelessly with a malicious device 606. The positioning device 602 may be attempting to conduct a positioning session with the positioning device 604. The malicious device 606 may be a malicious node that hacks into a network and proactively falsifies measurements with authentic nodes, such as the positioning device 602 and the positioning device 604, by pretending to be an in-network authentic node. The malicious device 606 may be an authentic node that has been hacked, or may be a device that is masquerading as another device. For example, the malicious device 606 may be masquerading as the positioning device 602 with respect to the positioning device 604, and the malicious device 606 may be masquerading as the positioning device 604 with respect to the positioning device 602.

In other words, the positioning device 602 may transmit the set of positioning signals 652, thinking that they are being received and measured by the positioning device 604. The malicious device 606 may receive the set of positioning signals 652 and transmit the set of transmissions 654 at the positioning device 602 in response, masquerading as the positioning device 604. Similarly, the positioning device 604 may transmit the set of positioning signals 656, thinking that they are being received and measured by the positioning device 602. The malicious device 606 may receive the set of positioning signals 656 and transmit the set of transmissions 658 at the positioning device 604 in response, masquerading as the positioning device 602. Such a scenario may be referred to as an in-network scenario.

A set of monitoring devices, such as the monitoring device 622 and the monitoring device 624, may monitor positioning signals transmitted by the positioning device 602 and the positioning device 604 to assist in identifying malicious transmissions, such as the set of transmissions 654 from the malicious device 606 and/or the set of transmissions 658 from the malicious device 606. For example, while the positioning device 602 transmits the set of positioning signals 652 to the positioning device 604 for a positioning session, the monitoring device 622 and/or the monitoring device 624 may also receive the set of positioning signals 652. Similarly, while the positioning device 604 transmits the set of positioning signals 656 to the positioning device 602 for a positioning session, the monitoring device 622 and/or the monitoring device 624 may also receive the set of positioning signals 656. The monitoring devices may monitor the set of positioning signals 652 and the set of positioning signals 656 to calculate a plurality of location attributes. For example, the set of monitoring devices may calculate a ToA, an AoA, an RSSI, a channel energy response, a maximum-to-median ratio associated with the channel energy response, a range, and/or a location. The plurality of location attributes may be associated with the positioning devices. For example, the plurality of location attributes may be used to estimate a location of the positioning device 602 and a location of the positioning device 604. Each of the plurality of location attributes may be associated with a plurality of time domains. In other words, each of the plurality of location attributes may be associated with a location of the positioning device 602 and the location of the positioning device 604 at different times. As a result, over time, the set of monitoring devices may understand the positions of the positioning device 602 and the positioning device 604. When the malicious device 606 transmits the set of transmissions 654 and/or the set of transmissions 658 from a position different than the position of the positioning device 602 and the positioning device 604, the set of monitoring devices may then understand that the set of transmissions 654 and/or the set of transmissions 658 are being transmitted from a position different than the position of the positioning device 602 and the positioning device 604.

While the diagram 600 in FIG. 6A and the diagram 650 in FIG. 6B show two monitoring devices, less or more monitoring devices may be used to monitor positioning signals from a set of wireless devices performing positioning with one another.

Such schemes may robustly validate CBR measurements by using additional existing infrastructure to monitor positioning signals transmitted by positioning devices performing ranging with one another. The additional existing infrastructure may be, for example, APs in a building that may receive, measure, and monitor transmitted wireless signals, such as Wi-Fi, BLE, UWB, or sidelink. A typical spoofing device may not be able to consistently spoof positioning signals (e.g., HADM measurements) over time. A set of monitoring devices, such as the monitoring device 622 and the monitoring device 624 in FIGs. 6A and 6B may identify such spurious measurements by offloading computations to an external infrastructure that provides a security check. Such a security check may be passively performed in the background. Methods based on received signal strength (e.g., RSSI) may be robust against such attacks. Such external infrastructure may detect spoofing by monitoring spurious transmissions having an unexpected received signal strength.

Both the positioning devices and the monitoring devices may be part of a common ecosystem, for example for a proprietary asset-tracking scenario. The measurements may also be made over different technologies, for example both BLE and UWB, or both UWB and sidelink, to monitor for spurious signals using different technologies. A connected intelligent edge (CIE) may coordinate the overall process between the monitoring devices and positioning devices. For example, a CIE may jointly process measurements made by multiple positioning devices. In one aspect, the CIE may implement outlier rejection algorithms to identify outliers based on positioning data from a plurality of positioning devices. The CIE may apply such algorithms to input data to transmit an indicator of a spurious transmission. Such an external infrastructure may be used to monitor positioning (e.g., ranging) using different wireless signals, such as BLE signals, UWB signals, Wi-Fi signals, and/or sidelink signals. The positioning devices may use any type of positioning estimation method, for example estimating ranging using RTT or RTP.

In some aspects, a set of monitoring devices may be configured to passively verify range estimates and identify bad measurements and/or spurious measurements. In other words, a monitoring device, such as an AP, may passively detect a security breach and report it to a set of positioning devices. For example, the positioning device 602 and the positioning device 604 in FIG. 6A may perform ranging using BLE signals. The monitoring device 622 and the monitoring device 624 may passively listen to the CBR or RTP measurements being exchanged between the positioning device 602 and the positioning device 604. The set of monitoring devices may use various methods to measure the range between the set of positioning devices. For example, the monitoring device 622 may translate a differential ToA measurement into a differential distance. The monitoring device 622 may measure the length of time for the set of positioning signals 608 to reach the monitoring device 622 from the positioning device 602, and may measure the length of time for the set of positioning signals 610 to reach the monitoring device 622 from the positioning device 604 to calculate a differential distance between the positioning device 602 and the positioning device 604. In other words, the monitoring device 622 may calculate a UL-TDoA. In another example, the monitoring device 622 may calculate a differential AoA measurement based on the difference between the UL-AoA that is measured with respect to the set of positioning signals 608 transmitted from the positioning device 602 and the set of positioning signals 610 transmitted from the positioning device 604. Such a calculation may be useful for signals with a small bandwidth (e.g., BLE signals) since ToA measurements may not be as accurate when the bandwidth is small, and an AP may be equipped with superior antenna arrays (compared with the antenna array on a mobile UE that performs positioning) for robust AoA estimation.

After the set of monitoring devices passively monitor location attributes (e.g., differential ToA and/or differential AoA) over time, at least one of the set of monitoring devices may receive and identify an irregular transmission, indicating a possible security breach in one or more time slots. At least one of the set of monitoring devices may inform the set of positioning devices (e.g., the initiator node of a positioning session) that one or more measurements is not valid. Such a determination may be made by the monitoring device using a time-domain variation threshold for the measurements. In other words, if the estimates of the differential ToA/AoA fluctuate over time, and a measurement fluctuates to meet or exceed a threshold value, a report message may be transmitted. In some aspects, at least one of the set of monitoring devices may provide a priority list and/or a ranking list of time slots. For example, each time slot may correspond with an associated BLE channel that is used in an HADM session. Some of the measurements may have been more reliable than others (e.g., within a threshold range). Quality metrics may be calculated based on a histogram of the location attributes, a Gaussian model of the location attributes, a standard deviation of the location attributes, a signal-to-interference plus noise ratio (SINR) corresponding to the positioning signal transmissions, and/or a strength indicator of a peak in a corresponding channel response (e.g., spurious peaks in the channel response) associated with the positioning signal transmissions. Each of the set of monitoring devices may passively verify range estimates. Each of the set of monitoring devices may identify bad measurements and/or spurious measurements.

For example, the monitoring device 622 may generate a histogram and/or a Gaussian fit to a set of measurements of the set of positioning signals 608 made over a range of time slots (i.e., a plurality of time domains). The monitoring device 622 may define a time-domain variation threshold as a certain interquartile range (e.g., for a histogram fit, top/bottom 10%) or as a certain integer multiple of the standard deviation (e.g., for a Gaussian fit, 2 standard deviations away from a mean value). The measurements of the set of positioning signals 608 may include, for example, a ToA, an AoA, an RSSI, a channel energy response, a maximum-to-median ratio associated with the channel energy response, a range, and/or a location. While there may be some statistically independent variation over time due to the channel for the monitoring device 622 with respect to the positioning device 602, the monitoring device 622 may detect spurious activity, such as the set of transmissions 612 from the malicious device 606. In fact, both the monitoring device 622 and the monitoring device 624 may detect such spurious activity simultaneously, or within the same time domain. In other words, the measurement value associated with measuring the set of transmissions 612 from the malicious device 606 may exceed different time-domain variation thresholds at each of the monitoring device 622 and the monitoring device 624. In some aspects, another threshold may be defined on both the monitoring device 622 and the monitoring device 624 that observe a measurement exceeding the first threshold. In response to the second threshold being exceeded, the set of monitoring devices may deem the corresponding time domain to be spurious. In some aspects, the reliability of each time domain may be ranked in terms of how much a measurement during the time domain exceeds a threshold value.

In some aspects, a set of monitoring devices, such as the monitoring device 622 and the monitoring device 624, may collectively arrive at a range estimate for a set of positioning devices, such as the positioning device 602 and the positioning device 604. One of the set of monitoring devices may be configured (e.g., by a LMF or a CIE) to perform collective processing, or a private server (E.g., a CIE) may perform such collective processing by collecting report message from the set of monitoring devices. Such collective processing may include outlier rejection algorithms. For example, the device performing the collective processing may select a suitable subset of monitoring devices, or may select a suitable set of time domains. Such collective processing may include utilizing the UL-RSSI measurements to calculate estimated positions for the set of positioning devices, such as the positioning device 602 and the positioning device 604. Such collective processing may include estimating the range between the set of positioning devices, such as the positioning device 602 and the positioning device 604, using the estimated positions. The device performing the collective processing may also compute an uncertainty associated with an estimate, such as the position estimate or the range estimate, and may provide an indicator of the uncertainty to the set of positioning devices (e.g., the initiator node of a positioning session). The device performing the collective processing may also provide thresholds, such that the positioning device may authenticate positioning measurements using a threshold calculated by analyzing positioning signal measurements over time. The threshold may be, for example, a probability that the range estimate within a particular time domain deviates from the range estimate given by the set of monitoring devices.

In response to receiving one or more report messages, at least one of the set of positioning devices (e.g., the initiator node) may discard one or more of the measurements. Where a positioning device receives multiple report messages (e.g., one report message from the monitoring device 622 and another report message from the monitoring device 624) a positioning device may form an aggregate priority list and/or ranking list using the multiple report messages and may then discord one or more measurements based on the aggregate list.

While the diagram 600 and the diagram 650 show a set of positioning devices as two positioning devices-the positioning device 602 and the positioning device 604-and show the set of monitoring devices as two monitoring devices-the monitoring device 622 and the monitoring device 624-the set of positioning devices and/or the set of monitoring devices may include a larger plurality. For example, a plurality of three or more positioning devices may perform positioning relative to one another using BLE signals to calculate the range of positioning devices relative to one another. Similarly, a plurality of three or more monitoring devices may monitor the BLE signals, and may communicate with some of the positioning devices via other technologies, for example Wi-Fi signals. The set of positioning devices may perform cooperative positioning, for example as a cluster of packages and/or pallets inside a warehouse or a retail store, or a group of users with cellphones. By performing cooperative positioning, the positioning devices may improve the overall position estimation accuracy among the positioning devices. Each of the set of monitoring devices may monitor positioning signals from a subset of the set of positioning devices, and may transmit report messages to assist in identifying which positioning signal measurements may be discarded on the basis of being associated with an indicator of being fraudulent or malicious. Future cooperative positioning sessions may be updated to remove fraudulent/malicious nodes, such that the remaining authentic nodes do not perform, and/or report, any more measurements with the fraudulent/malicious nodes.

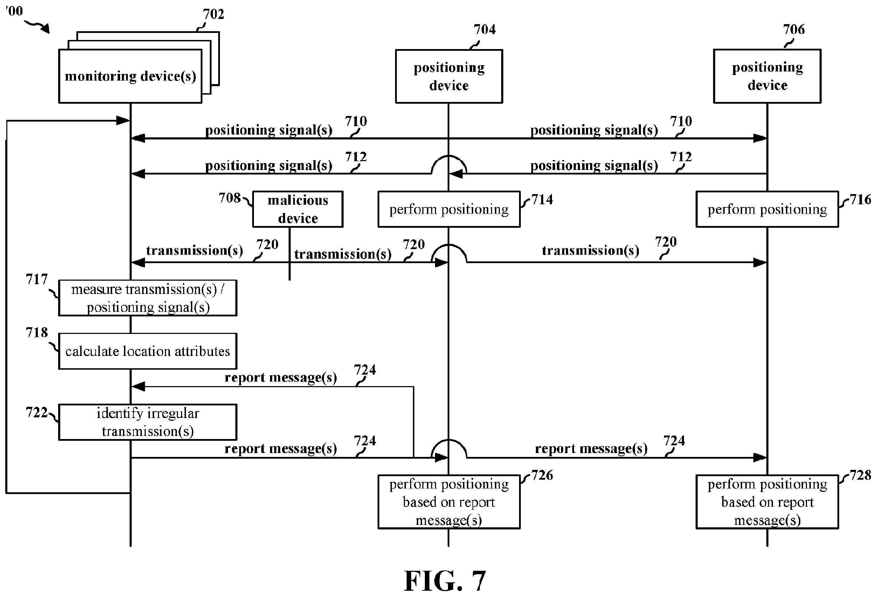

FIG. 7 is a connection flow diagram 700 illustrating examples of positioning between the positioning device 704 and the positioning device 706. A set of monitoring devices 702 may identify the set of transmissions 720 transmitted by the malicious device 708 as a set of irregular transmissions. The positioning device 704 may include a UE. The positioning device 706 may include a UE. The positioning device 704 and the positioning device 706 may be configured to perform positioning with one another, for example calculating a range between the devices. The set of monitoring devices 702 may include a base station, such as an AP or a TRP.

The positioning device 704 may transmit a set of positioning signals 710 to the positioning device 706. The positioning device 706 may receive the set of positioning signals 710 from the positioning device 704. The positioning device 704 may be configured to periodically transmit the set of positioning signals 710 in accordance with a schedule, for example a schedule that schedules a positioning session at regular intervals. At 716, the positioning device 706 may perform positioning on the set of positioning signals 710, for example by measuring the set of positioning signals 710 and by calculating a set of location attributes associated with the positioning device 704 based on the measurements. The set of positioning signals 710 may include a BLE signal, an UWB signal, a Wi-Fi signal, or a sidelink signal.

Similarly, the positioning device 706 may transmit a set of positioning signals 712 to the positioning device 704. The positioning device 704 may receive the set of positioning signals 710 from the positioning device 706. The positioning device 706 may be configured to periodically transmit the set of positioning signals 712 in accordance with a schedule, for example a schedule that schedules a positioning session at regular intervals. At 714, the positioning device 704 may perform positioning on the set of positioning signals 712, for example by measuring the set of positioning signals 712 and by calculating a set of location attributes associated with the positioning device 706 based on the measurements. The set of positioning signals 712 may include a BLE signal, an UWB signal, a Wi-Fi signal, or a sidelink signal. The set of location attributes may include a ToA, an AoA, an RSSI, a channel energy response, a maximum-to-median ratio associated with the channel energy response, a range, and/or a location.

The set of monitoring devices 702 may also monitor the set of positioning signals 710 and the set of positioning signals 712. In other words, the set of monitoring devices 702 may also receive the set of positioning signals 710 from the positioning device 704. The set of monitoring devices 702 may also receive the set of positioning signals 712 from the positioning device 706.

At 717, the set of monitoring devices 702 may measure the set of positioning signals 710 and the set of positioning signals 712. For example, the set of monitoring devices 702 may measure a ToA, an AoA, an RSSI, a channel energy response, or a maximum-to-median ratio associated with the channel energy response. At 718, the set of monitoring devices 702 may calculate location attributes based on the measurements. The location attributes may include the measurements taken at 717, or may include attributes based on the measurements. The set of location attributes may include a ToA, a TDoA, an AoA, an RSSI, a channel energy response, a maximum-to-median ratio associated with the channel energy response, a range, and/or a location. The set of monitoring devices 702 may calculate a set of location attributes for each of the positioning device 704 and the positioning device 706, for example an AoA for the positioning device 704 and an AoA for the positioning device 706. In other words, the set of monitoring devices 702 may calculate a plurality of location attributes, one for each positioning device that the set of monitoring devices 702 is monitoring. The set of monitoring devices 702 may associate a plurality of location attributes with a time domain. For example, if the set of monitoring devices 702 measure the set of positioning signals 710 and the set of positioning signals 712 in four distinct time domains (e.g., four equal positioning signal occasions repeated periodically), the set of monitoring devices 702 may associate each of the plurality of location attributes associated with each device of the set of positioning devices with a distinct time domain.

The set of monitoring devices 702 may calculate a reliability metric for each time domain. The reliability metric may indicate how reliable the measurements taken in that time domain might be, for example whether transmissions within the time domain met or exceeded a threshold value, or by how much transmissions within the time domain diverged from a mean value. In some aspects, the set of monitoring devices 702 may calculate a ranking list of time domains, ranking some time domains as having a higher reliability than other time domains. To calculate the reliability metric for each time domain, the set of monitoring devices 702 may calculate the reliability metric based on at least one of a histogram of the plurality of location attributes, a Gaussian model of the plurality of location attributes, a standard deviation of the plurality of location attributes, an SINR corresponding to each of the measured positioning signals, or a strength indicator of a peak in a corresponding channel response associated with each of the measured of positioning signals. To calculate the reliability metric for each time domain, the set of monitoring devices 702 may calculate the position of the positioning device 704 and the position of the positioning device 706, and may then identify transmissions as unreliable when they are transmitted from a calculated position that is different than the calculated position of the positioning device 704 or the calculated position of the positioning device 706. Similarly, to calculate the reliability metric for each time domain, the set of monitoring devices 702 may calculate the range of the positioning device 704 relative to the measuring monitoring device and the range of the positioning device 706 relative to the measuring monitoring device, and may then identify transmissions as unreliable when they are transmitted from a calculated range that is different than the calculated relative range of the positioning device 704 or the calculated relative range of the positioning device 706.

In some aspects, at least one of the set of monitoring devices 702 may calculate a coarse boundary region based on the environment about the positioning device 704 and the positioning device 706. For example, a network infrastructure may be programmed with knowledge of walls associated with the topology of a store that the positioning device 704 and the positioning device 706 are located within, or a network infrastructure may be programmed with knowledge of fixed furniture (e.g., shelving within a warehouse) that limit locations where the positioning device 704 and the positioning device 706 may be located, or where the positioning device 704 and the positioning device 706 may travel to. The set of monitoring devices 702 may include a set of APs specific to a topology associated with the positioning device 704 and the positioning device 706. As the set of monitoring devices 702 may be configured with a coarse boundary region associated with the positioning device 704 and the positioning device 706, and ground truth locations of the set of monitoring devices 702, the set of monitoring devices 702 may bound a possible calculated ToA value, or a calculated differential ToA value, by a minimum and a maximum value based on the coarse boundary region. Such bounds may be calculated based on geometrical distances between boundaries of a coarse region associated with the positioning device 704 and the positioning device 706 (e.g., a geometrical distance divided by the speed of light). In some aspects, at least one of the set of monitoring devices 702 may receive an indicator of a layout of a store, or a map of a building, which may be used to calculate the coarse boundary region. The set of monitoring devices 702 may calculate specific regions that the positioning device 704 and the positioning device 706 may be located in (e.g., within the aisles of a retail store, located on a shelf of a warehouse). The set of monitoring devices 702 may calculate such course boundary regions, or coarse movement pathways, based on such a-priori knowledge of the environment associated with the positioning device 704 and the positioning device 706, in addition to the set of positioning signals 710 and the set of positioning signals 712.

At some point, the malicious device 708 may transmit a set of transmissions 720. The set of transmissions 720 may be involved in an MITM scenario, or an in-network scenario. The set of transmissions 720 may be received by the positioning device 704. The set of transmissions 720 may be received by the positioning device 706. The set of transmissions may be received by the set of monitoring devices 702. In some aspects, the positioning device 704 may be configured to periodically transmit the set of positioning signals 710 in equal time domains. As such, the set of positioning signals 710 may be transmitted during, or after, the malicious device 708 transmits the set of transmissions 720. Similarly, in some aspects, the positioning device 706 may be configured to periodically transmit the set of positioning signals 712 in equal time domains. As such, the set of positioning signals 712 may be transmitted during, or after, the malicious device 708 transmits the set of transmissions 720. In other words, while the connection flow diagram 700 may show the set of positioning signals 710 as being transmitted before the set of positioning signals 712, and the set of positioning signals 712 as being transmitted before the set of transmissions 720, the set of positioning signals 710, set of positioning signals 712, and/or the set of transmissions 720 may be transmitted in any order, or may be transmitted concurrently with one another. At 717, the set of monitoring devices 702 may measure the set of transmissions 720 and, at 718, the set of monitoring devices 702 may calculate location attributes based on the measurements, similarly with respect to the set of positioning signals 710 from the positioning devices 704 and the set of positioning signals 712 from the positioning device 706.

At 722, the set of monitoring devices 702 may be configured to identify a set of irregular transmissions based on the calculated location attributes, for example by calculating a reliability metric associated with measuring the set of transmissions 720. The set of monitoring devices 702 may, for example, detect that a transmission purporting to be from a positioning device was transmitted from outside of a calculated coarse boundary region, or a positioning device has moved "through" a boundary, such as a wall of a store or a shelf of a warehouse, or that a calculated position/location jumps to a remote location by a minimum threshold distance, and jumps back to the original location of the positioning device, or that a positioning device travels greater than a threshold speed from one location to another. One of the set of monitoring devices 702 may identify a transmission received during a time domain to have a measurement value (e.g., an RSSI or a ToA) that is greater than or equal to a threshold value. The threshold value may be calculated based on a histogram or a Gaussian fit of historical measurements (e.g., a top 10% of a histogram fit, or two standard deviations away from a mean value). Transmissions received during that time period may be identified as a possible irregular transmission, or may be assigned a lower reliability metric based on such calculations.

In some aspects, the set of monitoring devices 702 may transmit a set of report messages 724 to the positioning device 704 and/or to the positioning device 706. The positioning device 704 and/or the positioning device 706 may receive the set of report messages 724. In some aspects, the set of report messages 724 may include an indicator of the plurality of location attributes, enabling the receiving positioning device to identify irregular transmissions based on the indicator. In some aspects, the set of report messages 724 may include an indicator of an irregular transmission, for example reliability metrics for each of the plurality of time domains, a reliability list that ranks a reliability of each of the plurality of time domains relative to one another, or a list of time domains that have been identified as having transmissions that may be irregular.

One or more of the set of monitoring devices 702 may transmit the set of report messages 724 to one or more others of the set of monitoring devices 702. In other words, any of the set of monitoring devices 702 may aggregate reports from at least some of the others of the set of monitoring devices 702 to improve the reliability of identifying an irregular transmission. For example, one of the set of monitoring devices 702 may collect a set of reliability metrics from a plurality of the set of monitoring devices 702, and identify a time domain as having spurious transmissions if a threshold number of the set of monitoring devices 702 identify the time domain as having a low reliability (e.g., x monitoring devices have a measurement value greater than y). In some embodiments, the set of report messages 724 may include

At 726, the positioning device 704 may identify a set of irregular transmissions, or a set of unreliable time domains, based on the set of report messages 724. The positioning device 704 may then perform positioning based on the set of report messages 724, for example by ignoring measurements associated with time domains that are at or below a threshold level, or by ignoring measurements associated with the bottom 10% of ranked time domains that are ranked by reliability. In other words, the positioning device 704 may use the set of report messages 724 to identify irregular transmissions transmitted by the malicious device 708 as the set of transmissions 720, disregarding transmissions transmitted during those time domains. Then, the positioning device 704 may perform positioning on the remaining positioning signals, which may include the set of positioning signals 712 transmitted by the positioning device 706.

Similarly, at 728, the positioning device 706 may identify a set of irregular transmissions, or a set of unreliable time domains, based on the set of report messages 724. The positioning device 706 may then perform positioning based on the set of report messages 724, for example by ignoring measurements associated with time domains that are at or below a threshold level, or by ignoring measurements associated with the bottom 10% of ranked time domains that are ranked by reliability. In other words, the positioning device 706 may use the set of report messages 724 to identify irregular transmissions transmitted by the malicious device 708 as the set of transmissions 720, disregarding transmissions transmitted during those time domains. Then, the positioning device 706 may perform positioning on the remaining positioning signals, which may include the set of positioning signals 710 transmitted by the positioning device 704.

In some aspects, the set of monitoring devices 702 may transmit the set of report messages 724 to at least one of the set of monitoring devices 702. In other words, in addition to the positioning device 704 and/or the positioning device 706 receiving and processing the set of report messages 724, at least one of the set of monitoring devices 702 may, at 718, calculate the location attributes by aggregating the set of report messages 724 to perform collective processing on the set of report messages 724 to do further calculations, for example a more accurate calculation of the position of the positioning device 704 and the position of the positioning device 706, which may improve the ability to rank the reliability of transmissions during a time domain. The at least one of the set of monitoring devices 702 may transmit the results of the collective processing to the others of the set of monitoring devices 702 to improve the identification of irregular transmissions. In some aspects, at 722, the set of monitoring devices 702 may identify subset of irregular report message from the set of report messages, allowing the set of monitoring devices 702 to disregarding a subset of the set of report messages. In some aspects, a CIE may receive the set of report messages and may identify a subset of irregular report messages from the set of report messages, and may transmit an indicator of the subset of irregular report messages to the set of monitoring devices so that the set of monitoring devices 702 may disregard a subset of the set of report messages. The set of monitoring devices 702 and/or the CIE may apply an outlier rejection algorithm to assist in disregarding reports from monitoring devices that may be suspect, allowing the set of monitoring devices 702 to disregard report messages associated with suspect monitoring devices. In some aspects, the set of monitoring devices 702 may transmit, in at least one of the set of report messages 724, an indicator of a suspect irregular report message, and/or an indicator of a suspect monitoring device, allowing the positioning device 704 or the positioning device 706 to disregard a subset of report messages that they receive.

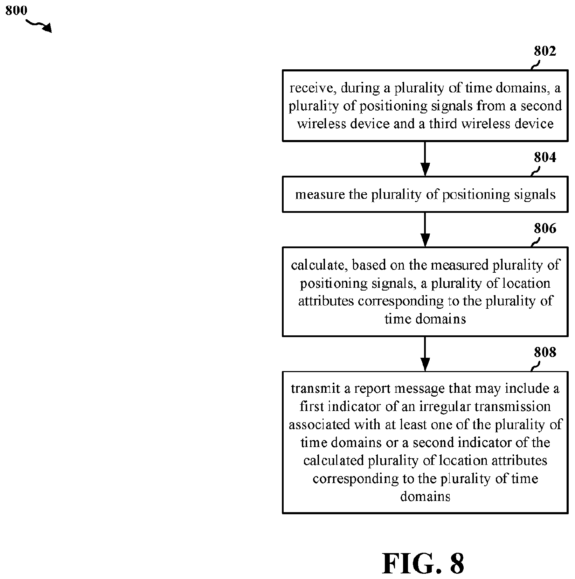

FIG. 8 is a flowchart 800 of a method of wireless communication. The method may be performed by a first wireless device (e.g., the base station 102, the base station 310; the wireless device 402, the wireless device 406; the monitoring device 622, the monitoring device 624; the set of monitoring devices 702; the network entity 1302, the network entity 1402, the network entity 1560). At 802, the first wireless device may receive, during a plurality of time domains, a plurality of positioning signals from a second wireless device and a third wireless device. For example, 802 may be performed by one of the set of monitoring devices 702 in FIG. 7, which may receive, during a plurality of time domains, the set of positioning signals 710 from the positioning device 704 and the set of positioning signals 712 from the positioning device 706. Moreover, 802 may be performed by the component 199 in FIGs. 1, 3, 14, or 15.

At 804, the first wireless device may measure the plurality of positioning signals. For example, 804 may be performed by one of the set of monitoring devices 702 in FIG. 7, which may, at 717, measure positioning signals, such as the set of positioning signals 710 from the positioning device 704 and the set of positioning signals 712 from the positioning device 706. Moreover, 804 may be performed by the component 199 in FIGs. 1, 3, 14, or 15.

At 806, the first wireless device may calculate, based on the measured plurality of positioning signals, a plurality of location attributes corresponding to the plurality of time domains. For example, 806 may be performed by one of the set of monitoring devices 702 in FIG. 7, which may, at 818, calculate, based on the measurements of the plurality of positioning signals taken at 817, a plurality of location attributes corresponding to the plurality of time domains. The plurality of location attributes may include a plurality of sets of location attributes, where each set corresponds with a time domain of the plurality of time domains. Moreover, 806 may be performed by the component 199 in FIGs. 1, 3, 14, or 15.

At 808, the first wireless device may transmit a report message that may include a first indicator of an irregular transmission associated with at least one of the plurality of time domains or a second indicator of the calculated plurality of location attributes corresponding to the plurality of time domains. For example, 808 may be performed by one of the set of monitoring devices 702 in FIG. 7, which may transmit a set of report messages 724 to the positioning device 704, the positioning device 706, and/or others of the set of monitoring devices 702. At least one of the set of report messages 724 may include a first indicator of an irregular transmission associated with at least one of the plurality of time domains or a second indicator of the calculated plurality of location attributes corresponding to the plurality of time domains. In other words, a report message may either indicate an irregular transmission, or allow for a positioning device to identify an irregular transmission based on the calculated location attributes. Moreover, 808 may be performed by the component 199 in FIGs. 1, 3, 14, or 15.

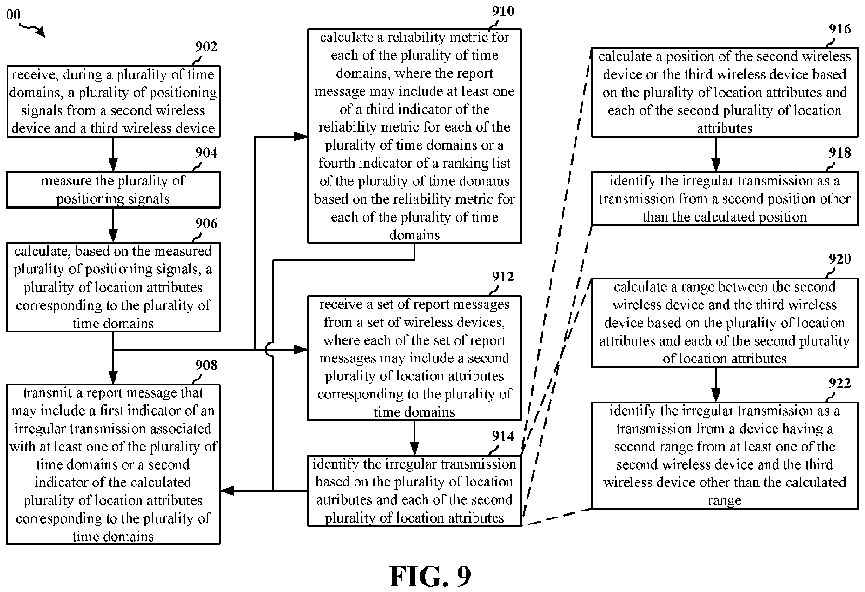

FIG. 9 is a flowchart 900 of a method of wireless communication. The method may be performed by a first wireless device (e.g., the base station 102, the base station 310; the wireless device 402, the wireless device 406; the monitoring device 622, the monitoring device 624; the set of monitoring devices 702; the network entity 1302, the network entity 1402, the network entity 1560). At 902, the first wireless device may receive, during a plurality of time domains, a plurality of positioning signals from a second wireless device and a third wireless device. For example, 902 may be performed by one of the set of monitoring devices 702 in FIG. 7, which may receive, during a plurality of time domains, the set of positioning signals 710 from the positioning device 704 and the set of positioning signals 712 from the positioning device 706. Moreover, 902 may be performed by the component 199 in FIGs. 1, 3, 14, or 15.

At 904, the first wireless device may measure the plurality of positioning signals. For example, 904 may be performed by one of the set of monitoring devices 702 in FIG. 7, which may, at 717, measure positioning signals, such as the set of positioning signals 710 from the positioning device 704 and the set of positioning signals 712 from the positioning device 706. Moreover, 904 may be performed by the component 199 in FIGs. 1, 3, 14, or 15.

At 906, the first wireless device may calculate, based on the measured plurality of positioning signals, a plurality of location attributes corresponding to the plurality of time domains. For example, 906 may be performed by one of the set of monitoring devices 702 in FIG. 7, which may, at 918, calculate, based on the measurements of the plurality of positioning signals taken at 917, a plurality of location attributes corresponding to the plurality of time domains. The plurality of location attributes may include a plurality of sets of location attributes, where each set corresponds with a time domain of the plurality of time domains. Moreover, 906 may be performed by the component 199 in FIGs. 1, 3, 14, or 15.

At 908, the first wireless device may transmit a report message that may include a first indicator of an irregular transmission associated with at least one of the plurality of time domains or a second indicator of the calculated plurality of location attributes corresponding to the plurality of time domains. For example, 908 may be performed by one of the set of monitoring devices 702 in FIG. 7, which may transmit a set of report messages 724 to the positioning device 704, the positioning device 706, and/or others of the set of monitoring devices 702. At least one of the set of report messages 724 may include a first indicator of an irregular transmission associated with at least one of the plurality of time domains or a second indicator of the calculated plurality of location attributes corresponding to the plurality of time domains. In other words, a report message may either indicate an irregular transmission, or allow for a positioning device to identify an irregular transmission based on the calculated location attributes. Moreover, 908 may be performed by the component 199 in FIGs. 1, 3, 14, or 15.

At 910, the first wireless device may calculate a reliability metric for each of the plurality of time domains. The report message may include at least one of a third indicator of the reliability metric for each of the plurality of time domains or a fourth indicator of a ranking list of the plurality of time domains based on the reliability metric for each of the plurality of time domains. For example, 910 may be performed by one of the set of monitoring devices 702 in FIG. 7, which may, at 722, calculate a reliability metric for each of the plurality of time domains. In other words, transmissions received during a time domain may be rated with a high reliability metric or a low reliability metric. The set of report messages 724 may include at least one of a third indicator of the reliability metric for each of the plurality of time domains or a fourth indicator of a ranking list of the plurality of time domains based on the reliability metric for each of the plurality of time domains. The ranking list may rank the plurality of time domains by the most reliable to the least reliable, or vice-versa. Moreover, 910 may be performed by the component 199 in FIGs. 1, 3, 14, or 15.

At 912, the first wireless device may receive a set of report messages from a set of wireless devices. Each of the set of report messages may include a second plurality of location attributes corresponding to the plurality of time domains. For example, 912 may be performed by one of the set of monitoring devices 702 in FIG. 7, which may receive the set of report messages 724 from others of the set of monitoring devices 702. Each of the set of report messages 724 may include a second plurality of location attributes corresponding to the plurality of time domains. In other words, each of the plurality of time domains may have an associated set of location attributes that may be used to identify an irregular transmission in one of the plurality of time domains. Moreover, 912 may be performed by the component 199 in FIGs. 1, 3, 14, or 15.

At 914, the first wireless device may identify the irregular transmission based on the plurality of location attributes and each of the second plurality of location attributes. For example, 914 may be performed by one of the set of monitoring devices 702 in FIG. 7, which may, at 722, identify the irregular transmission based on the plurality of location attributes and each of the second plurality of location attributes from the set of report messages 724. Moreover, 914 may be performed by the component 199 in FIGs. 1, 3, 14, or 15.

At 916, the first wireless device may calculate a position of the second wireless device or the third wireless device based on the plurality of location attributes and each of the second plurality of location attributes. For example, 916 may be performed by one of the set of monitoring devices 702 in FIG. 7, which may, at 718, calculate a position of the positioning device 704 and/or the positioning device 706 based on the plurality of location attributes calculated at 718 and each of the second plurality of location attributes received from the set of report messages 724 from others of the set of monitoring devices 702. Moreover, 916 may be performed by the component 199 in FIGs. 1, 3, 14, or 15.

At 918, the first wireless device may identify the irregular transmission as a transmission from a second position other than the calculated position. For example, 918 may be performed by one of the set of monitoring devices 702 in FIG. 7, which may, at 722, identify the irregular transmission as a transmission from a second position other than the calculated position. In other words, one of the set of monitoring devices 702 may determine that one of the set of transmissions 720 was transmitted from a location other than the location of the positioning device 704 and other than the location of the positioning device 706. Moreover, 918 may be performed by the component 199 in FIGs. 1, 3, 14, or 15.

At 920, the first wireless device may calculate a range between the second wireless device and the third wireless device based on the plurality of location attributes and each of the second plurality of location attributes. For example, 920 may be performed by one of the set of monitoring devices 702 in FIG. 7, which may calculate a range between the positioning device 704 and the positioning device 706 based on the plurality of location attributes calculated at 718 and each of the second plurality of location attributes received from the set of report messages 724 from others of the set of monitoring devices 702. Moreover, 920 may be performed by the component 199 in FIGs. 1, 3, 14, or 15.

At 922, the first wireless device may identify the irregular transmission as a transmission from a device having a second range from at least one of the second wireless device and the third wireless device other than the calculated range. For example, 922 may be performed by one of the set of monitoring devices 702 in FIG. 7, which may, at 722, identify the irregular transmission as a transmission from a device having a second range from at least one of the positioning device 704 and the positioning device 706 other than the calculated range. In other words, one of the set of monitoring devices 702 may calculate that one of the set of transmissions 720 is transmitted from a range that is different than the range to the positioning device 704 and the range to the positioning device 706. Moreover, 922 may be performed by the component 199 in FIGs. 1, 3, 14, or 15.

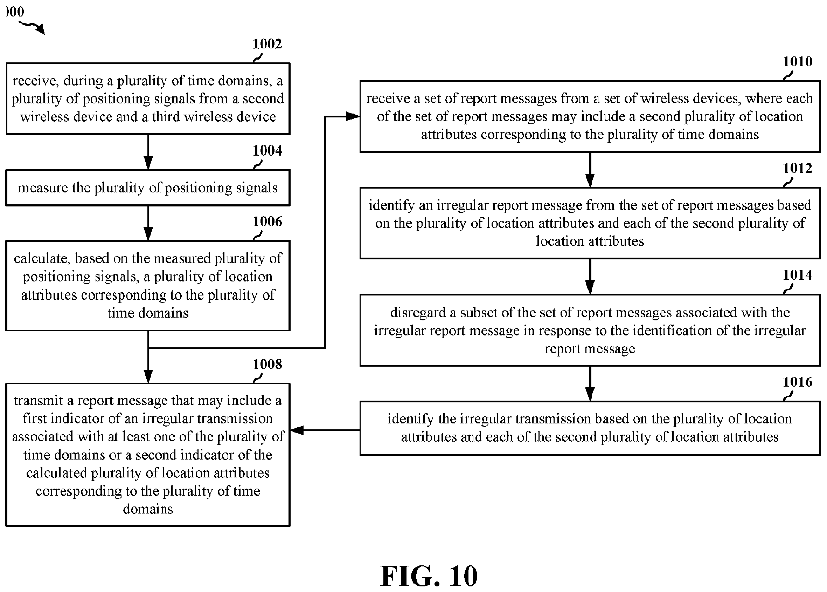

FIG. 10 is a flowchart 1000 of a method of wireless communication. The method may be performed by a first wireless device (e.g., the base station 102, the base station 310; the wireless device 402, the wireless device 406; the monitoring device 622, the monitoring device 624; the set of monitoring devices 702; the network entity 1302, the network entity 1402, the network entity 1560). At 1002, the first wireless device may receive, during a plurality of time domains, a plurality of positioning signals from a second wireless device and a third wireless device. For example, 1002 may be performed by one of the set of monitoring devices 702 in FIG. 7, which may receive, during a plurality of time domains, the set of positioning signals 710 from the positioning device 704 and the set of positioning signals 712 from the positioning device 706. Moreover, 1002 may be performed by the component 199 in FIGs. 1, 3, 14, or 15.

At 1004, the first wireless device may measure the plurality of positioning signals. For example, 1004 may be performed by one of the set of monitoring devices 702 in FIG. 7, which may, at 717, measure positioning signals, such as the set of positioning signals 710 from the positioning device 704 and the set of positioning signals 712 from the positioning device 706. Moreover, 1004 may be performed by the component 199 in FIGs. 1, 3, 14, or 15.

At 1006, the first wireless device may calculate, based on the measured plurality of positioning signals, a plurality of location attributes corresponding to the plurality of time domains. For example, 1006 may be performed by one of the set of monitoring devices 702 in FIG. 7, which may, at 1018, calculate, based on the measurements of the plurality of positioning signals taken at 1017, a plurality of location attributes corresponding to the plurality of time domains. The plurality of location attributes may include a plurality of sets of location attributes, where each set corresponds with a time domain of the plurality of time domains. Moreover, 1006 may be performed by the component 199 in FIGs. 1, 3, 14, or 15.

At 1008, the first wireless device may transmit a report message that may include a first indicator of an irregular transmission associated with at least one of the plurality of time domains or a second indicator of the calculated plurality of location attributes corresponding to the plurality of time domains. For example, 1008 may be performed by one of the set of monitoring devices 702 in FIG. 7, which may transmit a set of report messages 724 to the positioning device 704, the positioning device 706, and/or others of the set of monitoring devices 702. At least one of the set of report messages 724 may include a first indicator of an irregular transmission associated with at least one of the plurality of time domains or a second indicator of the calculated plurality of location attributes corresponding to the plurality of time domains. In other words, a report message may either indicate an irregular transmission, or allow for a positioning device to identify an irregular transmission based on the calculated location attributes. Moreover, 1008 may be performed by the component 199 in FIGs. 1, 3, 14, or 15.

At 1010, the first wireless device may receive a set of report messages from a set of wireless devices, where each of the set of report messages may include a second plurality of location attributes corresponding to the plurality of time domains. For example, 1010 may be performed by one of the set of monitoring devices 702 in FIG. 7, which may receive the set of report messages 724 from others of the set of monitoring devices 702. Each of the set of report messages 724 may include a second plurality of location attributes corresponding to the plurality of time domains. In other words, each of the plurality of time domains may have an associated set of location attributes that may be used to identify an irregular transmission in one of the plurality of time domains. Moreover, 1010 may be performed by the component 199 in FIGs. 1, 3, 14, or 15.

At 1012, the first wireless device may identify an irregular report message from the set of report messages based on the plurality of location attributes and each of the second plurality of location attributes. For example, 1012 may be performed by one of the set of monitoring devices 702 in FIG. 7, which may, at 722, identify an irregular report message from the set of report messages 724 based on the plurality of location attributes and each of the second plurality of location attributes. For example, one of the set of monitoring devices 702 may determine that one of the set of report messages 724 reports a reliability metric for a time domain that diverges by at least a threshold value from the reliability metric reported by others of the set of report messages 724. Moreover, 1012 may be performed by the component 199 in FIGs. 1, 3, 14, or 15.

At 1014, the first wireless device may disregard a subset of the set of report messages associated with the irregular report message in response to the identification of the irregular report message. For example, 1014 may be performed by one of the set of monitoring devices 702 in FIG. 7, which may, at 722, disregard a subset of the set of report messages 724 associated with the irregular report message in response to the identification of the irregular report message. Moreover, 1014 may be performed by the component 199 in FIGs. 1, 3, 14, or 15.

At 1016, the first wireless device may identify the irregular transmission based on the plurality of location attributes and each of the second plurality of location attributes. For example, 1016 may be performed by one of the set of monitoring devices 702 in FIG. 7, which may, at 722, identify the irregular transmission based on the plurality of location attributes and each of the second plurality of location attributes that were not discarded at 1014. Moreover, 1016 may be performed by the component 199 in FIGs. 1, 3, 14, or 15.

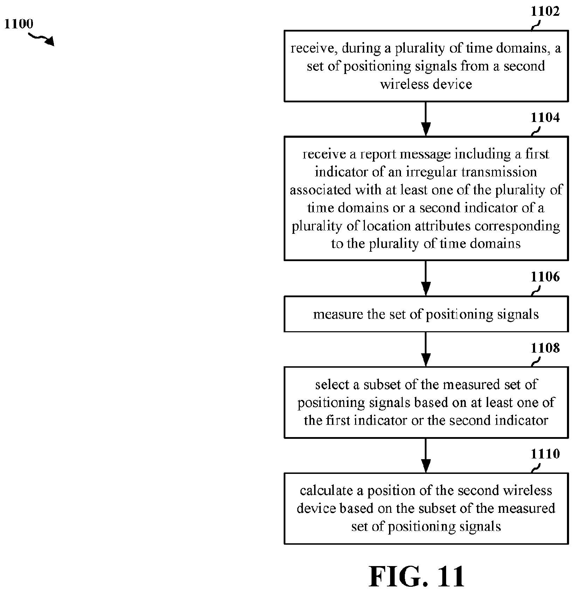

FIG. 11 is a flowchart 1100 of a method of wireless communication. The method may be performed by a first wireless device (e.g., the UE 104, the UE 350; the wireless device 404; the positioning device 602, the positioning device 604, the positioning device 704, the positioning device 706; the apparatus 1304). At 1102, the first wireless device may receive, during a plurality of time domains, a set of positioning signals from a second wireless device. For example, 1102 may be performed by the positioning device 704 in FIG. 7, which may receive, during a plurality of time domains, the set of positioning signals 712 from the positioning device 706. The positioning device 704 may also receive, during a plurality of time domains, the set of transmissions 720 from the malicious device 708. Moreover, 1102 may be performed by the component 198 in FIGs. 1, 3, or 13.

At 1104, the first wireless device may receive a report message including a first indicator of an irregular transmission associated with at least one of the plurality of time domains or a second indicator of a plurality of location attributes corresponding to the plurality of time domains. For example, 1104 may be performed by the positioning device 704 in FIG. 7, which may receive a set of report messages 724 from the set of monitoring devices 702. The set of report messages 724 may include a first indicator of an irregular transmission associated with at least one of the plurality of time domains or a second indicator of a plurality of location attributes corresponding to the plurality of time domains. Moreover, 1104 may be performed by the component 198 in FIGs. 1, 3, or 13.

At 1106, the first wireless device may measure the set of positioning signals. For example, 1106 may be performed by the positioning device 704 in FIG. 7, which may, at 726, measure the set of positioning signals 712. Moreover, 1106 may be performed by the component 198 in FIGs. 1, 3, or 13.

At 1108, the first wireless device may select a subset of the measured set of positioning signals based on at least one of the first indicator or the second indicator. For example, 1108 may be performed by the positioning device 704 in FIG. 7, which may, at 726, select a subset of the measured set of positioning signals based on at least one of the first indicator or the second indicator. In other words, the positioning device 704 may identify the set of transmissions 720 based on the set of report messages 724, and disregard the set of transmissions 720 so as to perform positioning based on the set of positioning signals 712. Moreover, 1108 may be performed by the component 198 in FIGs. 1, 3, or 13.

At 1110, the first wireless device may calculate a position of the second wireless device based on the subset of the measured set of positioning signals. For example, 1110 may be performed by the positioning device 704 in FIG. 7, which may, at 726, calculate a position of the positioning device 706 based on the subset of the measured set of positioning signals (e.g., the set of positioning signals 712 minus those that share a time domain with the set of transmissions 720). Moreover, 1110 may be performed by the component 198 in FIGs. 1, 3, or 13.

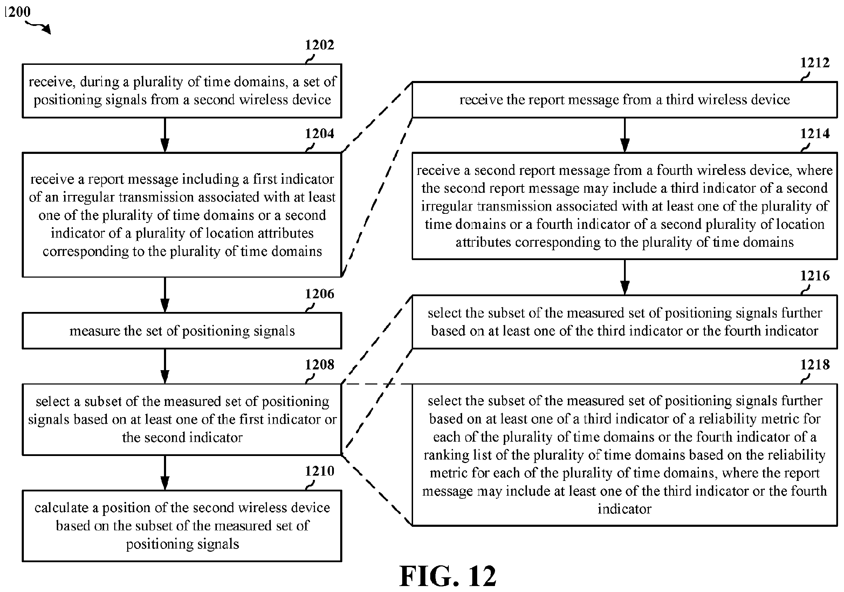

FIG. 12 is a flowchart 1200 of a method of wireless communication. The method may be performed by a first wireless device (e.g., the UE 104, the UE 350; the wireless device 404; the positioning device 602, the positioning device 604, the positioning device 704, the positioning device 706; the apparatus 1304). At 1202, the first wireless device may receive, during a plurality of time domains, a set of positioning signals from a second wireless device. For example, 1202 may be performed by the positioning device 704 in FIG. 7, which may receive, during a plurality of time domains, the set of positioning signals 712 from the positioning device 706. The positioning device 704 may also receive, during a plurality of time domains, the set of transmissions 720 from the malicious device 708. Moreover, 1202 may be performed by the component 198 in FIGs. 1, 3, or 13.

At 1204, the first wireless device may receive a report message including a first indicator of an irregular transmission associated with at least one of the plurality of time domains or a second indicator of a plurality of location attributes corresponding to the plurality of time domains. For example, 1204 may be performed by the positioning device 704 in FIG. 7, which may receive a set of report messages 724 from the set of monitoring devices 702. The set of report messages 724 may include a first indicator of an irregular transmission associated with at least one of the plurality of time domains or a second indicator of a plurality of location attributes corresponding to the plurality of time domains. Moreover, 1204 may be performed by the component 198 in FIGs. 1, 3, or 13.

At 1206, the first wireless device may measure the set of positioning signals. For example, 1206 may be performed by the positioning device 704 in FIG. 7, which may, at 726, measure the set of positioning signals 712. Moreover, 1206 may be performed by the component 198 in FIGs. 1, 3, or 13.

At 1208, the first wireless device may select a subset of the measured set of positioning signals based on at least one of the first indicator or the second indicator. For example, 1208 may be performed by the positioning device 704 in FIG. 7, which may, at 726, select a subset of the measured set of positioning signals based on at least one of the first indicator or the second indicator. In other words, the positioning device 704 may identify the set of transmissions 720 based on the set of report messages 724, and disregard the set of transmissions 720 so as to perform positioning based on the set of positioning signals 712. Moreover, 1208 may be performed by the component 198 in FIGs. 1, 3, or 13.

At 1210, the first wireless device may calculate a position of the second wireless device based on the subset of the measured set of positioning signals. For example, 1210 may be performed by the positioning device 704 in FIG. 7, which may, at 726, calculate a position of the positioning device 706 based on the subset of the measured set of positioning signals (e.g., the set of positioning signals 712 minus those that share a time domain with the set of transmissions 720). Moreover, 1210 may be performed by the component 198 in FIGs. 1, 3, or 13.

At 1212, the first wireless device may receive the report message from a third wireless device. For example, 1212 may be performed by the positioning device 704 in FIG. 7, which may receive some of the set of report messages 724 from others of the set of monitoring devices 702. Moreover, 1212 may be performed by the component 198 in FIGs. 1, 3, or 13.

At 1214, the first wireless device may receive a second report message from a fourth wireless device. The second report message may include a third indicator of a second irregular transmission associated with at least one of the plurality of time domains or a fourth indicator of a second plurality of location attributes corresponding to the plurality of time domains. For example, 1214 may be performed by the positioning device 704 in FIG. 7, which may receive some of the set of report messages 724 from others of the set of monitoring devices 702. The report message received at 1212 may be received from a different monitoring device of the set of monitoring devices 702 as the report message received at 1214. The second report message may include a third indicator of a second irregular transmission associated with at least one of the plurality of time domains or a fourth indicator of a second plurality of location attributes corresponding to the plurality of time domains. Moreover, 1214 may be performed by the component 198 in FIGs. 1, 3, or 13.

At 1216, the first wireless device may select the subset of the measured set of positioning signals further based on at least one of the third indicator or the fourth indicator. For example, 1216 may be performed by the positioning device 704 in FIG. 7, which may select the subset of the measured set of positioning signals further based on at least one of the third indicator or the fourth indicator. Moreover, 1216 may be performed by the component 198 in FIGs. 1, 3, or 13.

At 1218, the first wireless device may select the subset of the measured set of positioning signals further based on at least one of a third indicator of a reliability metric for each of the plurality of time domains or the fourth indicator of a ranking list of the plurality of time domains based on the reliability metric for each of the plurality of time domains. The report message may include at least one of the third indicator or the fourth indicator. For example, 1218 may be performed by the positioning device 704 in FIG. 7, which may select the subset of the measured set of positioning signals further based on at least one of a third indicator of a reliability metric for each of the plurality of time domains or the fourth indicator of a ranking list of the plurality of time domains based on the reliability metric for each of the plurality of time domains. The report message of the set of report messages 724 may include at least one of the third indicator or the fourth indicator. Moreover, 1218 may be performed by the component 198 in FIGs. 1, 3, or 13.

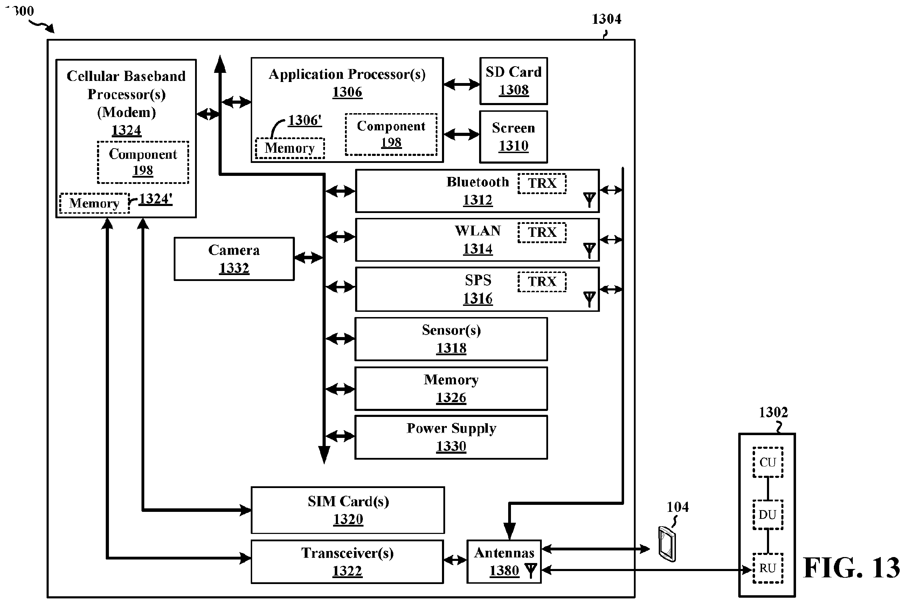

FIG. 13 is a diagram 1300 illustrating an example of a hardware implementation for an apparatus 1304. The apparatus 1304 may be a UE, a component of a UE, or may implement UE functionality. In some aspects, the apparatus 1304 may include at least one cellular baseband processor 1324 (also referred to as a modem) coupled to one or more transceivers 1322 (e.g., cellular RF transceiver). The cellular baseband processor(s) 1324 may include at least one on-chip memory 1324'. In some aspects, the apparatus 1304 may further include one or more subscriber identity modules (SIM) cards 1320 and at least one application processor 1306 coupled to a secure digital (SD) card 1308 and a screen 1310. The application processor(s) 1306 may include on-chip memory 1306'. In some aspects, the apparatus 1304 may further include a Bluetooth module 1312, a WLAN module 1314, an SPS module 1316 (e.g., GNSS module), one or more sensor modules 1318 (e.g., barometric pressure sensor / altimeter; motion sensor such as inertial measurement unit (IMU), gyroscope, and/or accelerometer(s); light detection and ranging (LIDAR), radio assisted detection and ranging (RADAR), sound navigation and ranging (SONAR), magnetometer, audio and/or other technologies used for positioning), additional memory modules 1326, a power supply 1330, and/or a camera 1332. The Bluetooth module 1312, the WLAN module 1314, and the SPS module 1316 may include an on-chip transceiver (TRX) (or in some cases, just a receiver (RX)). The Bluetooth module 1312, the WLAN module 1314, and the SPS module 1316 may include their own dedicated antennas and/or utilize the antennas 1380 for communication. The cellular baseband processor(s) 1324 communicates through the transceiver(s) 1322 via one or more antennas 1380 with the UE 104 and/or with an RU associated with a network entity 1302. The cellular baseband processor(s) 1324 and the application processor(s) 1306 may each include a computer-readable medium / memory 1324', 1306', respectively. The additional memory modules 1326 may also be considered a computer-readable medium / memory. Each computer-readable medium / memory 1324', 1306', 1326 may be non-transitory. The cellular baseband processor(s) 1324 and the application processor(s) 1306 are each responsible for general processing, including the execution of software stored on the computer-readable medium / memory. The software, when executed by the cellular baseband processor(s) 1324 / application processor(s) 1306, causes the cellular baseband processor(s) 1324 / application processor(s) 1306 to perform the various functions described *supra.* The computer-readable medium / memory may also be used for storing data that is manipulated by the cellular baseband processor(s) 1324 / application processor(s) 1306 when executing software. The cellular baseband processor(s) 1324 / application processor(s) 1306 may be a component of the UE 350 and may include the at least one memory 360 and/or at least one of the TX processor 368, the RX processor 356, and the controller/processor 359. In one configuration, the apparatus 1304 may be at least one processor chip (modem and/or application) and include just the cellular baseband processor(s) 1324 and/or the application processor(s) 1306, and in another configuration, the apparatus 1304 may be the entire UE (e.g., see UE 350 of FIG. 3) and include the additional modules of the apparatus 1304.

As discussed *supra,* the component 198 may be configured to receive, during a plurality of time domains, a set of positioning signals from a second wireless device. The component 198 may be configured to receive a report message including a first indicator of an irregular transmission associated with at least one of the plurality of time domains or a second indicator of a plurality of location attributes corresponding to the plurality of time domains. The component 198 may be configured to measure the set of positioning signals. The component 198 may be configured to select a subset of the measured set of positioning signals based on at least one of the first indicator or the second indicator. The component 198 may be configured to calculate a position of the second wireless device based on the subset of the measured set of positioning signals. The component 198 may be within the cellular baseband processor(s) 1324, the application processor(s) 1306, or both the cellular baseband processor(s) 1324 and the application processor(s) 1306. The component 198 may be one or more hardware components specifically configured to carry out the stated processes/algorithm, implemented by one or more processors configured to perform the stated processes/algorithm, stored within a computer-readable medium for implementation by one or more processors, or some combination thereof. When multiple processors are implemented, the multiple processors may perform the stated processes/algorithm individually or in combination. As shown, the apparatus 1304 may include a variety of components configured for various functions. In one configuration, the apparatus 1304, and in particular the cellular baseband processor(s) 1324 and/or the application processor(s) 1306, may include means for receiving, during a plurality of time domains, a set of positioning signals from a second wireless device. The apparatus 1304 may include means for receiving a report message including a first indicator of an irregular transmission associated with at least one of the plurality of time domains or a second indicator of a plurality of location attributes corresponding to the plurality of time domains. The apparatus 1304 may include means for measuring the set of positioning signals. The apparatus 1304 may include means for selecting a subset of the measured set of positioning signals based on at least one of the first indicator or the second indicator. The apparatus 1304 may include means for calculating a position of the second wireless device based on the subset of the measured set of positioning signals. The plurality of location attributes may include at least one of a ToA, an AoA, an RSSI, a channel energy response, a maximum-to-median ratio associated with the channel energy response, a range, or a location. The set of positioning signals may include at least one of a BLE signal, a UWB signal, a Wi-Fi signal, or a sidelink signal. The plurality of time domains may include a periodic set of equal time domains. The report message may include a third indicator of a reliability metric for each of the plurality of time domains. The plurality of time domains may include a fourth indicator of a ranking list of the plurality of time domains based on the reliability metric for each of the plurality of time domains. The apparatus 1304 may include means for selecting the subset of the measured set of positioning signals by selecting the subset of the measured set of positioning signals further based on at least one of the third indicator or the fourth indicator. The apparatus 1304 may include means for receiving the report message by receiving the report message from a third wireless device. The apparatus 1304 may include means for receiving a second report message from a fourth wireless device. The second report message may include a third indicator of a second irregular transmission associated with at least one of the plurality of time domains. The second report message may include a fourth indicator of a second plurality of location attributes corresponding to the plurality of time domains. The apparatus 1304 may include means for selecting the subset of the measured set of positioning signals by selecting the subset of the measured set of positioning signals further based on at least one of the third indicator or the fourth indicator. The third wireless device may include a first AP. The fourth wireless device may include a second AP. The means may be the component 198 of the apparatus 1304 configured to perform the functions recited by the means. As described *supra,* the apparatus 1304 may include the TX processor 368, the RX processor 356, and the controller/processor 359. As such, in one configuration, the means may be the TX processor 368, the RX processor 356, and/or the controller/processor 359 configured to perform the functions recited by the means.

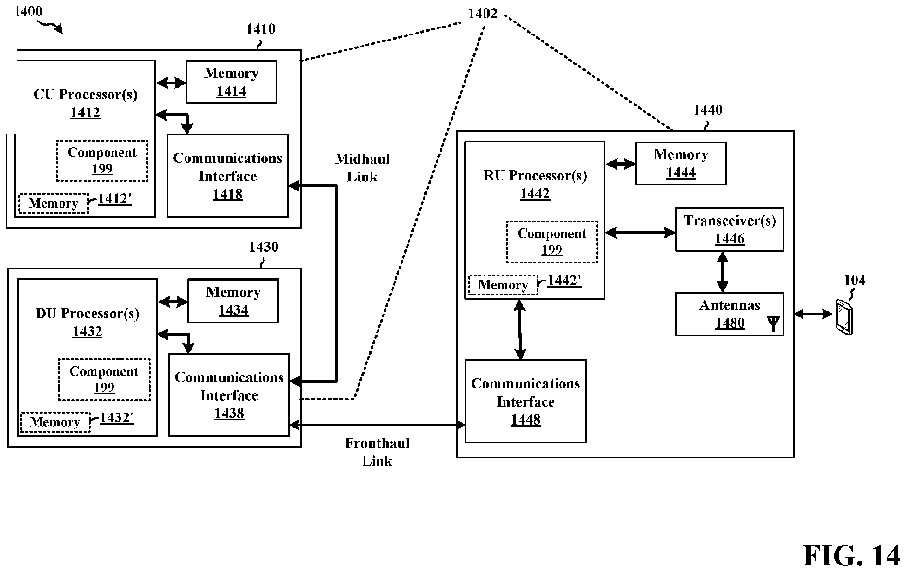

FIG. 14 is a diagram 1400 illustrating an example of a hardware implementation for a network entity 1402. The network entity 1402 may be a BS, a component of a BS, or may implement BS functionality. The network entity 1402 may include at least one of a CU 1410, a DU 1430, or an RU 1440. For example, depending on the layer functionality handled by the component 199, the network entity 1402 may include the CU 1410; both the CU 1410 and the DU 1430; each of the CU 1410, the DU 1430, and the RU 1440; the DU 1430; both the DU 1430 and the RU 1440; or the RU 1440. The CU 1410 may include at least one CU processor 1412. The CU processor(s) 1412 may include on-chip memory 1412'. In some aspects, the CU 1410 may further include additional memory modules 1414 and a communications interface 1418. The CU 1410 communicates with the DU 1430 through a midhaul link, such as an F1 interface. The DU 1430 may include at least one DU processor 1432. The DU processor(s) 1432 may include on-chip memory 1432'. In some aspects, the DU 1430 may further include additional memory modules 1434 and a communications interface 1438. The DU 1430 communicates with the RU 1440 through a fronthaul link. The RU 1440 may include at least one RU processor 1442. The RU processor(s) 1442 may include on-chip memory 1442'. In some aspects, the RU 1440 may further include additional memory modules 1444, one or more transceivers 1446, antennas 1480, and a communications interface 1448. The RU 1440 communicates with the UE 104. The on-chip memory 1412', 1432', 1442' and the additional memory modules 1414, 1434, 1444 may each be considered a computer-readable medium / memory. Each computer-readable medium / memory may be non-transitory. Each of the processors 1412, 1432, 1442 is responsible for general processing, including the execution of software stored on the computer-readable medium / memory. The software, when executed by the corresponding processor(s) causes the processor(s) to perform the various functions described *supra.* The computer-readable medium / memory may also be used for storing data that is manipulated by the processor(s) when executing software.

As discussed *supra*, the component 199 may be configured to receive, during a plurality of time domains, a plurality of positioning signals from a second wireless device and a third wireless device. The component 199 may be configured to measure the plurality of positioning signals. The component 199 may be configured to calculate, based on the measured plurality of positioning signals, a plurality of location attributes corresponding to the plurality of time domains. The component 199 may be configured to transmit a report message including a first indicator of an irregular transmission associated with at least one of the plurality of time domains or a second indicator of the calculated plurality of location attributes corresponding to the plurality of time domains. The component 199 may be within one or more processors of one or more of the CU 1410, DU 1430, and the RU 1440. The component 199 may be one or more hardware components specifically configured to carry out the stated processes/algorithm, implemented by one or more processors configured to perform the stated processes/algorithm, stored within a computer-readable medium for implementation by one or more processors, or some combination thereof. When multiple processors are implemented, the multiple processors may perform the stated processes/algorithm individually or in combination. The network entity 1402 may include a variety of components configured for various functions. In one configuration, the network entity 1402 may include means for receiving, during a plurality of time domains, a plurality of positioning signals from a second wireless device and a third wireless device. The network entity 1402 may include means for measuring the plurality of positioning signals. The network entity 1402 may include means for calculating, based on the measured plurality of positioning signals, a plurality of location attributes corresponding to the plurality of time domains. The network entity 1402 may include means for transmitting a report message including a first indicator of an irregular transmission associated with at least one of the plurality of time domains or a second indicator of the calculated plurality of location attributes corresponding to the plurality of time domains. The plurality of location attributes may include at least one of a ToA, an AoA, an RSSI, a channel energy response, a maximum-to-median ratio associated with the channel energy response, a range, or a location. The plurality of positioning signals may include at least one of a BLE signal, a UWB signal, a Wi-Fi signal, or a sidelink signal. The plurality of time domains may include a periodic set of equal time domains. The network entity 1402 may include means for calculating a reliability metric for each of the plurality of time domains. The report message may include a third indicator of the reliability metric for each of the plurality of time domains. The report message may include a fourth indicator of a ranking list of the plurality of time domains based on the reliability metric for each of the plurality of time domains. The network entity 1402 may include means for calculating the reliability metric for each of the plurality of time domains by calculating the reliability metric for each of the plurality of time domains based on at least one of a histogram of the plurality of location attributes, a Gaussian model of the plurality of location attributes, a standard deviation of the plurality of location attributes, a SINR corresponding to each of the plurality of positioning signals, or a strength indicator of a peak in a corresponding channel response associated with each of the plurality of positioning signals. The network entity 1402 may include means for receiving a set of report messages from a set of wireless devices. Each of the set of report messages may include a second plurality of location attributes corresponding to the plurality of time domains. The network entity 1402 may include means for identifying the irregular transmission based on the plurality of location attributes and each of the second plurality of location attributes. The network entity 1402 may include means for calculating the irregular transmission by calculating a position of the second wireless device or the third wireless device based on the plurality of location attributes and each of the second plurality of location attributes and by identifying the irregular transmission as a transmission from a second position other than the calculated position. The network entity 1402 may include means for calculating the irregular transmission by calculating a range between the second wireless device and the third wireless device based on the plurality of location attributes and each of the second plurality of location attributes and by identifying the irregular transmission as a transmission from a device having a second range from at least one of the second wireless device and the third wireless device other than the calculated range. The network entity 1402 may include means for identifying an irregular report message from the set of report messages based on the plurality of location attributes and each of the second plurality of location attributes. The network entity 1402 may include means for disregarding a subset of the set of report messages associated with the irregular report message in response to the identification of the irregular report message. The second wireless device and the third wireless device may conduct a positioning session (e.g., perform positioning) based on the plurality of positioning signals. The plurality of location attributes may be associated with at least one of the second wireless device or the third wireless device. The network entity 1402 may include an AP. The second wireless device may include a UE. The third wireless device may include a UE. The means may be the component 199 of the network entity 1402 configured to perform the functions recited by the means. As described *supra,* the network entity 1402 may include the TX processor 316, the RX processor 370, and the controller/processor 375. As such, in one configuration, the means may be the TX processor 316, the RX processor 370, and/or the controller/processor 375 configured to perform the functions recited by the means.

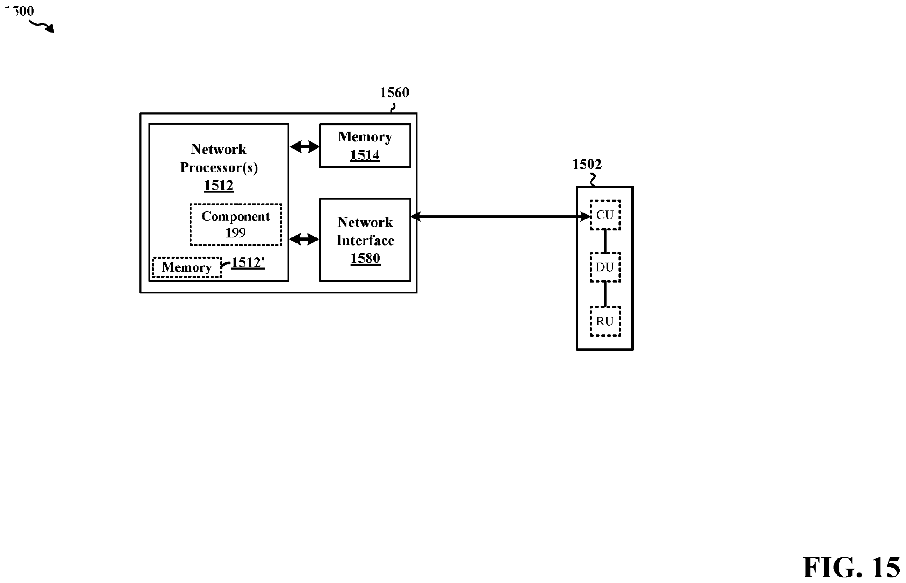

FIG. 15 is a diagram 1500 illustrating an example of a hardware implementation for a network entity 1560. In one example, the network entity 1560 may be within the core network 120. The network entity 1560 may include at least one network processor 1512. The network processor(s) 1512 may include on-chip memory 1512'. In some aspects, the network entity 1560 may further include additional memory modules 1514. The network entity 1560 communicates via the network interface 1580 directly (e.g., backhaul link) or indirectly (e.g., through a RIC) with the CU 1502. The on-chip memory 1512' and the additional memory modules 1514 may each be considered a computer-readable medium / memory. Each computer-readable medium / memory may be non-transitory. The network processor(s) 1512 is responsible for general processing, including the execution of software stored on the computer-readable medium / memory. The software, when executed by the corresponding processor(s) causes the processor(s) to perform the various functions described *supra.* The computer-readable medium / memory may also be used for storing data that is manipulated by the processor(s) when executing software.

As discussed *supra,* the component 199 may be configured to receive, during a plurality of time domains, a plurality of positioning signals from a second wireless device and a third wireless device. The component 199 may be configured to measure the plurality of positioning signals. The component 199 may be configured to calculate, based on the measured plurality of positioning signals, a plurality of location attributes corresponding to the plurality of time domains. The component 199 may be configured to transmit a report message including a first indicator of an irregular transmission associated with at least one of the plurality of time domains or a second indicator of the calculated plurality of location attributes corresponding to the plurality of time domains. The component 199 may be within the network processor(s) 1512. The component 199 may be one or more hardware components specifically configured to carry out the stated processes/algorithm, implemented by one or more processors configured to perform the stated processes/algorithm, stored within a computer-readable medium for implementation by one or more processors, or some combination thereof. When multiple processors are implemented, the multiple processors may perform the stated processes/algorithm individually or in combination. The network entity 1560 may include a variety of components configured for various functions. In one configuration, the network entity 1560 may include means for receiving, during a plurality of time domains, a plurality of positioning signals from a second wireless device and a third wireless device. The network entity 1560 may include means for measuring the plurality of positioning signals. The network entity 1560 may include means for calculating, based on the measured plurality of positioning signals, a plurality of location attributes corresponding to the plurality of time domains. The network entity 1560 may include means for transmitting a report message including a first indicator of an irregular transmission associated with at least one of the plurality of time domains or a second indicator of the calculated plurality of location attributes corresponding to the plurality of time domains. The plurality of location attributes may include at least one of a ToA, an AoA, an RSSI, a channel energy response, a maximum-to-median ratio associated with the channel energy response, a range, or a location. The plurality of positioning signals may include at least one of a BLE signal, a UWB signal, a Wi-Fi signal, or a sidelink signal. The plurality of time domains may include a periodic set of equal time domains. The network entity 1560 may include means for calculating a reliability metric for each of the plurality of time domains. The report message may include a third indicator of the reliability metric for each of the plurality of time domains. The report message may include a fourth indicator of a ranking list of the plurality of time domains based on the reliability metric for each of the plurality of time domains. The network entity 1560 may include means for calculating the reliability metric for each of the plurality of time domains by calculating the reliability metric for each of the plurality of time domains based on at least one of a histogram of the plurality of location attributes, a Gaussian model of the plurality of location attributes, a standard deviation of the plurality of location attributes, a SINR corresponding to each of the plurality of positioning signals, or a strength indicator of a peak in a corresponding channel response associated with each of the plurality of positioning signals. The network entity 1560 may include means for receiving a set of report messages from a set of wireless devices. Each of the set of report messages may include a second plurality of location attributes corresponding to the plurality of time domains. The network entity 1560 may include means for identifying the irregular transmission based on the plurality of location attributes and each of the second plurality of location attributes. The network entity 1560 may include means for calculating the irregular transmission by calculating a position of the second wireless device or the third wireless device based on the plurality of location attributes and each of the second plurality of location attributes and by identifying the irregular transmission as a transmission from a second position other than the calculated position. The network entity 1560 may include means for calculating the irregular transmission by calculating a range between the second wireless device and the third wireless device based on the plurality of location attributes and each of the second plurality of location attributes and by identifying the irregular transmission as a transmission from a device having a second range from at least one of the second wireless device and the third wireless device other than the calculated range. The network entity 1560 may include means for identifying an irregular report message from the set of report messages based on the plurality of location attributes and each of the second plurality of location attributes. The network entity 1560 may include means for disregarding a subset of the set of report messages associated with the irregular report message in response to the identification of the irregular report message. The second wireless device and the third wireless device may perform positioning based on the plurality of positioning signals. The plurality of location attributes may be associated with at least one of the second wireless device or the third wireless device. The network entity 1560 may include an AP. The second wireless device may include a UE. The third wireless device may include a UE. The means may be the component 199 of the network entity 1560 configured to perform the functions recited by the means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not limited to the aspects described herein, but are to be accorded the full scope consistent with the language claims. Reference to an element in the singular does not mean "one and only one" unless specifically so stated, but rather "one or more." Terms such as "if," "when," and "while" do not imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. Sets should be interpreted as a set of elements where the elements number one or more. Accordingly, for a set of X, X would include one or more elements. When at least one processor is configured to perform a set of functions, the at least one processor, individually or in any combination, is configured to perform the set of functions. Accordingly, each processor of the at least one processor may be configured to perform a particular subset of the set of functions, where the subset is the full set, a proper subset of the set, or an empty subset of the set. If a first apparatus receives data from or transmits data to a second apparatus, the data may be received/transmitted directly between the first and second apparatuses, or indirectly between the first and second apparatuses through a set of apparatuses. A device configured to "output" data, such as a transmission, signal, or message, may transmit the data, for example with a transceiver, may send the data to a device that transmits the data, or may output the data to a component of the device. A device configured to "obtain" data, such as a transmission, signal, or message, may receive, for example with a transceiver, may obtain the data from a device that receives the data, or may obtain the data from a component of the device. Information stored in a memory includes instructions and/or data. All structural and functional equivalents to the elements of the various aspects described throughout this disclosure that are known or later come to be known to those of ordinary skill in the art are expressly incorporated herein by reference and are encompassed by the claims. Moreover, nothing disclosed herein is dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

As used herein, the phrase "based on" shall not be construed as a reference to a closed set of information, one or more conditions, one or more factors, or the like. In other words, the phrase "based on A" (where "A" may be information, a condition, a factor, or the like) shall be construed as "based at least on A" unless specifically recited differently.

The following aspects are illustrative only and may be combined with other aspects or teachings described herein, without limitation.

Aspect 1 is a method of wireless communication at a first wireless device, comprising receiving, during a plurality of time domains, a plurality of positioning signals from a second wireless device and a third wireless device. The method may include measuring the plurality of positioning signals. The method may include calculating, based on the measured plurality of positioning signals, a plurality of location attributes corresponding to the plurality of time domains. The method may include transmitting a report message comprising a first indicator of an irregular transmission associated with at least one of the plurality of time domains or a second indicator of the calculated plurality of location attributes corresponding to the plurality of time domains. For example, the report message may include an indicator of a bad/spurious transmission. In another example, the report message may include an indicator of a measurement/range/angle/location that allows the second wireless device to identify a bad/spurious transmission.

Aspect 2 is the method of aspect 1, wherein the plurality of location attributes comprises at least one of a time of arrival (ToA), an angle of arrival (AoA), a reference signal strength indicator (RSSI), a channel energy response, a maximum-to-median ratio associated with the channel energy response, a range, or a location.

Aspect 3 is the method of either of aspects 1 or 2, wherein the plurality of positioning signals comprises at least one of a Bluetooth low energy (BLE) signal, an ultra-wideband (UWB) signal, a Wi-Fi signal, or a sidelink signal.

Aspect 4 is the method of any of aspects 1 to 3, wherein the plurality of time domains comprises a periodic set of equal time domains.

Aspect 5 is the method of any of aspects 1 to 4, further comprising calculating a reliability metric for each of the plurality of time domains, wherein the report message comprises at least one of a third indicator of the reliability metric for each of the plurality of time domains or a fourth indicator of a ranking list of the plurality of time domains based on the reliability metric for each of the plurality of time domains.

Aspect 6 is the method of aspect 5, wherein calculating the reliability metric for each of the plurality of time domains comprises calculating the reliability metric for each of the plurality of time domains based on at least one of a histogram of the plurality of location attributes, a Gaussian model of the plurality of location attributes, a standard deviation of the plurality of location attributes, a signal-to-interference plus noise ratio (SINR) corresponding to each of the plurality of positioning signals, or a strength indicator of a peak in a corresponding channel response associated with each of the plurality of positioning signals.

Aspect 7 is the method of any of aspects 1 to 6, further comprising receiving a set of report messages from a set of wireless devices, wherein each of the set of report messages comprises a second plurality of location attributes corresponding to the plurality of time domains. The method may include identifying the irregular transmission based on the plurality of location attributes and each of the second plurality of location attributes.

Aspect 8 is the method of aspect 7, wherein calculating the irregular transmission comprises: (a) calculating a position of the second wireless device or the third wireless device based on the plurality of location attributes and each of the second plurality of location attributes; and (b) identifying the irregular transmission as a transmission from a second position other than the calculated position.

Aspect 9 is the method of either of aspects 7 or 8, wherein calculating the irregular transmission comprises: (a) calculating a range between the second wireless device and the third wireless device based on the plurality of location attributes and each of the second plurality of location attributes; and (b) identifying the irregular transmission as a transmission from a device having a second range from at least one of the second wireless device and the third wireless device other than the calculated range.

Aspect 10 is the method of any of aspects 1 to 9, further comprising identifying an irregular report message from the set of report messages based on the plurality of location attributes and each of the second plurality of location attributes. The method may include disregarding a subset of the set of report messages associated with the irregular report message in response to the identification of the irregular report message.

Aspect 11 is the method of any of aspects 1 to 10, wherein the second wireless device and the third wireless device conduct a positioning session based on the plurality of positioning signals, wherein the plurality of location attributes is associated with at least one of the second wireless device or the third wireless device.

Aspect 12 is the method of any of aspects 1 to 11, wherein the first wireless device comprises an access point (AP).

Aspect 13 is the method of any of aspects 1 to 12, wherein the second wireless device comprises a first user equipment (UE) and the third wireless device comprises a second UE.

Aspect 14 is a method of wireless communication at a first wireless device, comprising receiving, during a plurality of time domains, a set of positioning signals from a second wireless device. The method may include receiving a report message comprising a first indicator of an irregular transmission associated with at least one of the plurality of time domains or a second indicator of a plurality of location attributes corresponding to the plurality of time domains. The method may include measuring the set of positioning signals. The method may include selecting a subset of the measured set of positioning signals based on at least one of the first indicator or the second indicator. The method may include calculating a position of the second wireless device based on the subset of the measured set of positioning signals.

Aspect 15 is the method of aspect 14, wherein the plurality of location attributes comprises at least one of: a time of arrival (ToA); an angle of arrival (AoA); a reference signal strength indicator (RSSI); a channel energy response; a maximum-to-median ratio associated with the channel energy response; a range; or a location.

Aspect 16 is the method of either of aspects 14 or 15, wherein the set of positioning signals comprises at least one of: a Bluetooth low energy (BLE) signal; an ultra-wideband (UWB) signal; a Wi-Fi signal; or a sidelink signal.

Aspect 17 is the method of any of aspects 14 to 16, wherein the plurality of time domains comprises a periodic set of equal time domains.

Aspect 18 is the method of any of aspects 14 to 17, wherein the report message comprises at least one of a third indicator of a reliability metric for each of the plurality of time domains or a fourth indicator of a ranking list of the plurality of time domains based on the reliability metric for each of the plurality of time domains, wherein selecting the subset of the measured set of positioning signals comprises selecting the subset of the measured set of positioning signals further based on at least one of the third indicator or the fourth indicator.

Aspect 19 is the method of any of aspects 14 to 18, wherein receiving the report message comprises receiving the report message from a third wireless device. The method may include receiving a second report message from a fourth wireless device, wherein the second report message comprises a third indicator of a second irregular transmission associated with at least one of the plurality of time domains or a fourth indicator of a second plurality of location attributes corresponding to the plurality of time domains. Selecting the subset of the measured set of positioning signals comprises selecting the subset of the measured set of positioning signals further based on at least one of the third indicator or the fourth indicator.

Aspect 20 is the method of aspect 19, wherein the third wireless device comprises a first access point (AP), and wherein the fourth wireless device comprises a second AP.

Aspect 21 is the method of any of aspects 14 to 20, wherein the first wireless device comprises a first user equipment (UE), and wherein the second wireless device comprises a second UE.

Aspect 22 is an apparatus for wireless communication, including: at least one memory; and at least one processor coupled to the at least one memory and, based at least in part on information stored in the at least one memory, the at least one processor, individually or in any combination, is configured to implement any of aspects 1 to 21.

Aspect 23 is the apparatus of aspect 22, further including at least one of an antenna or a transceiver coupled to the at least one processor.

Aspect 24 is an apparatus for wireless communication including means for implementing any of aspects 1 to 21.

Aspect 25 is a computer-readable medium (e.g., a non-transitory computer-readable medium) storing computer executable code, where the code when executed by a processor causes the processor to implement any of aspects 1 to 21.

Embodiments of the invention can be described with reference to the following numbered clauses, with preferred features laid out in the dependent clauses:
1. An apparatus for wireless communication at a first wireless device, comprising:
   at least one memory; and
   at least one processor coupled to the at least one memory and, based at least in part on information stored in the at least one memory, the at least one processor, individually or in any combination, is configured to:
      receive, during a plurality of time domains, a plurality of positioning signals from a second wireless device and a third wireless device;
      measure the plurality of positioning signals;
      calculate, based on the measured plurality of positioning signals, a plurality of location attributes corresponding to the plurality of time domains; and
      transmit a report message comprising a first indicator of an irregular transmission associated with at least one of the plurality of time domains or a second indicator of the calculated plurality of location attributes corresponding to the plurality of time domains.
2. The apparatus of clause 1, wherein the calculated plurality of location attributes comprises at least one of:
   a time of arrival (ToA);
   an angle of arrival (AoA);
   a reference signal strength indicator (RSSI);
   a channel energy response;
   a maximum-to-median ratio associated with the channel energy response;
   a range; or
   a location.
3. The apparatus of clause 1, wherein the plurality of positioning signals comprises at least one of:
   a Bluetooth low energy (BLE) signal;
   an ultra-wideband (UWB) signal;
   a Wi-Fi signal; or
   a sidelink signal.
4. The apparatus of clause 1, wherein the plurality of time domains comprises a periodic set of equal time domains.
5. The apparatus of clause 1, wherein the at least one processor, individually or in any combination, is further configured to:
   calculate a reliability metric for each of the plurality of time domains, wherein the report message comprises at least one of a third indicator of the reliability metric for each of the plurality of time domains or a fourth indicator of a ranking list of the plurality of time domains based on the reliability metric for each of the plurality of time domains.
6. The apparatus of clause 5, wherein, to calculate the reliability metric for each of the plurality of time domains, the at least one processor, individually or in any combination, is configured to calculate the reliability metric for each of the plurality of time domains based on at least one of:
   a histogram of the plurality of location attributes;
   a Gaussian model of the plurality of location attributes;
   a standard deviation of the plurality of location attributes;
   a signal-to-interference plus noise ratio (SINR) corresponding to each of the plurality of positioning signals; or
   a strength indicator of a peak in a corresponding channel response associated with each of the plurality of positioning signals.
7. The apparatus of clause 1, wherein the at least one processor, individually or in any combination, is further configured to:
   receive a set of report messages from a set of wireless devices, wherein each of the set of report messages comprises a second plurality of location attributes corresponding to the plurality of time domains; and
   identify the irregular transmission based on the plurality of location attributes and each of the second plurality of location attributes.
8. The apparatus of clause 7, wherein, to identify the irregular transmission, the at least one processor, individually or in any combination, is configured to:
   calculate a position of the second wireless device or the third wireless device based on the plurality of location attributes and each of the second plurality of location attributes; and
   identify the irregular transmission as a transmission from a second position other than the calculated position.
9. The apparatus of clause 7, wherein, to identify the irregular transmission, the at least one processor, individually or in any combination, is configured to:
   calculate a range between the second wireless device and the third wireless device based on the plurality of location attributes and each of the second plurality of location attributes; and
   identify the irregular transmission as a transmission from a device having a second range from at least one of the second wireless device and the third wireless device other than the calculated range.
10. The apparatus of clause 7, wherein the at least one processor, individually or in any combination, is further configured to:
   identify an irregular report message from the set of report messages based on the plurality of location attributes and each of the second plurality of location attributes; and
   disregard a subset of the set of report messages associated with the irregular report message in response to the identification of the irregular report message.
11. The apparatus of clause 1, wherein the second wireless device and the third wireless device conduct a positioning session based on the plurality of positioning signals, wherein the plurality of location attributes is associated with at least one of the second wireless device or the third wireless device.
12. The apparatus of clause 1, wherein the first wireless device comprises an access point (AP).
13. The apparatus of clause 1, further comprising at least one of an antenna or a transceiver coupled to the at least one processor, wherein to transmit the report message, the at least one processor, individually or in any combination, is configured to transmit the report message via at least one of the antenna or the transceiver, and wherein the second wireless device comprises a first user equipment (UE) and the third wireless device comprises a second UE.
14. An apparatus for wireless communication at a first wireless device, comprising:
   at least one memory; and
   at least one processor coupled to the at least one memory and, based at least in part on information stored in the at least one memory, the at least one processor, individually or in any combination, is configured to:
      receive, during a plurality of time domains, a set of positioning signals from a second wireless device;
      receive a report message comprising a first indicator of an irregular transmission associated with at least one of the plurality of time domains or a second indicator of a plurality of location attributes corresponding to the plurality of time domains;
      measure the set of positioning signals;
      select a subset of the measured set of positioning signals based on at least one of the first indicator or the second indicator; and
      calculate a position of the second wireless device based on the subset of the measured set of positioning signals.
15. The apparatus of clause 14, wherein the plurality of location attributes comprises at least one of:
   a time of arrival (ToA);
   an angle of arrival (AoA);
   a reference signal strength indicator (RSSI);
   a channel energy response;
   a maximum-to-median ratio associated with the channel energy response;
   a range; or
   a location.
16. The apparatus of clause 14, wherein the set of positioning signals comprises at least one of:
   a Bluetooth low energy (BLE) signal;
   an ultra-wideband (UWB) signal;
   a Wi-Fi signal; or
   a sidelink signal.
17. The apparatus of clause 14, wherein the plurality of time domains comprises a periodic set of equal time domains.
18. The apparatus of clause 14, wherein the report message comprises at least one of a third indicator of a reliability metric for each of the plurality of time domains or a fourth indicator of a ranking list of the plurality of time domains based on the reliability metric for each of the plurality of time domains, wherein, to select the subset of the measured set of positioning signals, the at least one processor, individually or in any combination, is configured to:
   select the subset of the measured set of positioning signals further based on at least one of the third indicator or the fourth indicator.
19. The apparatus of clause 14, wherein, to receive the report message, the at least one processor, individually or in any combination, is configured to receive the report message from a third wireless device, wherein the at least one processor, individually or in any combination, is further configured to:
   receive a second report message from a fourth wireless device, wherein the second report message comprises a third indicator of a second irregular transmission associated with at least one of the plurality of time domains or a fourth indicator of a second plurality of location attributes corresponding to the plurality of time domains, wherein, to select the subset of the measured set of positioning signals, the at least one processor, individually or in any combination, is configured to select the subset of the measured set of positioning signals further based on at least one of the third indicator or the fourth indicator.
20. The apparatus of clause 19, wherein the third wireless device comprises a first access point (AP), and wherein the fourth wireless device comprises a second AP.
21. The apparatus of clause 14, further comprising at least one of an antenna or a transceiver coupled to the at least one processor, wherein to receive the report message, the at least one processor, individually or in any combination, is configured to receive the report message via at least one of the antenna or the transceiver, and wherein the first wireless device comprises a first user equipment (UE), and wherein the second wireless device comprises a second UE.
22. A method of wireless communication at a first wireless device, comprising:
   receiving, during a plurality of time domains, a plurality of positioning signals from a second wireless device and a third wireless device;
   measuring the plurality of positioning signals;
   calculating, based on the measured plurality of positioning signals, a plurality of location attributes corresponding to the plurality of time domains; and
   transmitting a report message comprising a first indicator of an irregular transmission associated with at least one of the plurality of time domains or a second indicator of the calculated plurality of location attributes corresponding to the plurality of time domains.
23. The method of clause 22, further comprising:
   calculating a reliability metric for each of the plurality of time domains, wherein the report message comprises at least one of a third indicator of the reliability metric for each of the plurality of time domains or a fourth indicator of a ranking list of the plurality of time domains based on the reliability metric for each of the plurality of time domains.
24. The method of clause 22, further comprising:
   receiving a set of report messages from a set of wireless devices, wherein each of the set of report messages comprises a second plurality of location attributes corresponding to the plurality of time domains; and
   identifying the irregular transmission based on the plurality of location attributes and each of the second plurality of location attributes.
25. The method of clause 24, wherein calculating the irregular transmission comprises:
   calculating a position of the second wireless device or the third wireless device based on the plurality of location attributes and each of the second plurality of location attributes; and
   identifying the irregular transmission as a transmission from a second position other than the calculated position.
26. The method of clause 24, wherein calculating the irregular transmission comprises:
   calculating a range between the second wireless device and the third wireless device based on the plurality of location attributes and each of the second plurality of location attributes; and
   identifying the irregular transmission as a transmission from a device having a second range from at least one of the second wireless device and the third wireless device other than the calculated range.
27. The method of clause 24, further comprising:
   identifying an irregular report message from the set of report messages based on the plurality of location attributes and each of the second plurality of location attributes; and
   disregarding a subset of the set of report messages associated with the irregular report message in response to the identification of the irregular report message.
28. A method of wireless communication at a first wireless device, comprising:
   receiving, during a plurality of time domains, a set of positioning signals from a second wireless device;
   receiving a report message comprising a first indicator of an irregular transmission associated with at least one of the plurality of time domains or a second indicator of a plurality of location attributes corresponding to the plurality of time domains;
   measuring the set of positioning signals;
   selecting a subset of the measured set of positioning signals based on at least one of the first indicator or the second indicator; and
   calculating a position of the second wireless device based on the subset of the measured set of positioning signals.
29. The method of clause 28, wherein the report message comprises at least one of a third indicator of a reliability metric for each of the plurality of time domains or a fourth indicator of a ranking list of the plurality of time domains based on the reliability metric for each of the plurality of time domains, wherein selecting the subset of the measured set of positioning signals comprises:
   selecting the subset of the measured set of positioning signals further based on at least one of the third indicator or the fourth indicator.
30. The method of clause 28, wherein receiving the report message comprises receiving the report message from a third wireless device, further comprising:
   receiving a second report message from a fourth wireless device, wherein the second report message comprises a third indicator of a second irregular transmission associated with at least one of the plurality of time domains or a fourth indicator of a second plurality of location attributes corresponding to the plurality of time domains, wherein selecting the subset of the measured set of positioning signals comprises selecting the subset of the measured set of positioning signals further based on at least one of the third indicator or the fourth indicator.

## Claims

1. An apparatus for wireless communication at a first wireless device, comprising:
at least one memory; and
at least one processor coupled to the at least one memory and, based at least in part on information stored in the at least one memory, the at least one processor, individually or in any combination, is configured to:
receive, during a plurality of time domains, a set of positioning signals from a second wireless device;
receive a report message comprising a first indicator of an irregular transmission associated with at least one of the plurality of time domains or a second indicator of a plurality of location attributes corresponding to the plurality of time domains;
measure the set of positioning signals;
select a subset of the measured set of positioning signals based on at least one of the first indicator or the second indicator; and
calculate a position of the second wireless device based on the subset of the measured set of positioning signals.

2. The apparatus of claim 1, wherein the plurality of location attributes comprises at least one of:
a time of arrival (ToA);
an angle of arrival (AoA);
a reference signal strength indicator (RSSI);
a channel energy response;
a maximum-to-median ratio associated with the channel energy response;
a range; or
a location.

3. The apparatus of claim 1, wherein the set of positioning signals comprises at least one of:
a Bluetooth low energy (BLE) signal;
an ultra-wideband (UWB) signal;
a Wi-Fi signal; or
a sidelink signal.

4. The apparatus of claim 1, wherein the plurality of time domains comprises a periodic set of equal time domains.

5. The apparatus of claim 1, wherein the report message comprises at least one of a third indicator of a reliability metric for each of the plurality of time domains or a fourth indicator of a ranking list of the plurality of time domains based on the reliability metric for each of the plurality of time domains, wherein, to select the subset of the measured set of positioning signals, the at least one processor, individually or in any combination, is configured to:
select the subset of the measured set of positioning signals further based on at least one of the third indicator or the fourth indicator.

6. The apparatus of claim 1, wherein, to receive the report message, the at least one processor, individually or in any combination, is configured to receive the report message from a third wireless device, wherein the at least one processor, individually or in any combination, is further configured to:
receive a second report message from a fourth wireless device, wherein the second report message comprises a third indicator of a second irregular transmission associated with at least one of the plurality of time domains or a fourth indicator of a second plurality of location attributes corresponding to the plurality of time domains, wherein, to select the subset of the measured set of positioning signals, the at least one processor, individually or in any combination, is configured to select the subset of the measured set of positioning signals further based on at least one of the third indicator or the fourth indicator.

7. The apparatus of claim 6, wherein the third wireless device comprises a first access point (AP), and wherein the fourth wireless device comprises a second AP.

8. The apparatus of claim 1, further comprising at least one of an antenna or a transceiver coupled to the at least one processor, wherein to receive the report message, the at least one processor, individually or in any combination, is configured to receive the report message via at least one of the antenna or the transceiver, and wherein the first wireless device comprises a first user equipment (UE), and wherein the second wireless device comprises a second UE.

9. A method of wireless communication at a first wireless device, comprising:
receiving, during a plurality of time domains, a set of positioning signals from a second wireless device;
receiving a report message comprising a first indicator of an irregular transmission associated with at least one of the plurality of time domains or a second indicator of a plurality of location attributes corresponding to the plurality of time domains;
measuring the set of positioning signals;
selecting a subset of the measured set of positioning signals based on at least one of the first indicator or the second indicator; and
calculating a position of the second wireless device based on the subset of the measured set of positioning signals.

10. The method of claim 9, wherein the plurality of location attributes comprises at least one of:
a time of arrival (ToA);
an angle of arrival (AoA);
a reference signal strength indicator (RSSI);
a channel energy response;
a maximum-to-median ratio associated with the channel energy response;
a range; or
a location.

11. The method of claim 9, wherein the set of positioning signals comprises at least one of:
a Bluetooth low energy (BLE) signal;
an ultra-wideband (UWB) signal;
a Wi-Fi signal; or
a sidelink signal.

12. The method of claim 9, wherein the plurality of time domains comprises a periodic set of equal time domains.

13. The method of claim 9, wherein the report message comprises at least one of a third indicator of a reliability metric for each of the plurality of time domains or a fourth indicator of a ranking list of the plurality of time domains based on the reliability metric for each of the plurality of time domains, wherein selecting the subset of the measured set of positioning signals comprises:
selecting the subset of the measured set of positioning signals further based on at least one of the third indicator or the fourth indicator.

14. The method of claim 9, wherein receiving the report message comprises receiving the report message from a third wireless device, further comprising:
receiving a second report message from a fourth wireless device, wherein the second report message comprises a third indicator of a second irregular transmission associated with at least one of the plurality of time domains or a fourth indicator of a second plurality of location attributes corresponding to the plurality of time domains, wherein selecting the subset of the measured set of positioning signals comprises selecting the subset of the measured set of positioning signals further based on at least one of the third indicator or the fourth indicator.

15. A non-transitory computer-readable medium storing computer executable code, where the code when executed by a processor causes the process to implement the method of any of claims 9 to 14.
